# EUROPEAN PATENT SPECIFICATION

(11) **EP 3 081 031 B1**
(45) Date of publication and mention of the grant of the patent: **19.09.2018**
(21) Application number: 14869053.0
(22) Date of filing: 12.12.2014
(51) Int. Cl.: H04W 28/04, H04L 1/16, H04W 72/04, H04L 1/18, H04L 5/00, H04L 5/14

(54) **TERMINAL APPARATUS, AND BASE STATION APPARATUS**
ENDGERÄTEVORRICHTUNG UND BASISSTATIONSVORRICHTUNG
APPAREIL TERMINAL ET APPAREIL DE STATION DE BASE

(30) Priority: 12.12.2013 US 201361915137 P
(43) Date of publication of application: 19.10.2016
(73) Proprietor: Sharp Kabushiki Kaisha, Osaka-shi, Osaka 545-8522 (JP)
(72) Inventor: RUIZ DELGADO, Alvaro, Osaka-shi, Osaka 545-8522 (JP); SHIMEZAWA, Kazuyuki, Osaka-shi, Osaka 545-8522 (JP); NOGAMI, Toshizo, Osaka-shi, Osaka 545-8522 (JP); IMAMURA, Kimihiko, Osaka-shi, Osaka 545-8522 (JP); KUSASHIMA, Naoki, Osaka-shi, Osaka 545-8522 (JP)
(74) Representative: Müller-Boré & Partner Patentanwälte PartG mbB
(86) International application number: PCT/JP2014/083633
(87) International publication number: WO 2015/088046

(56) References cited:
- WO-A1-2012/139291
- WO-A1-2013/157869
- WO-A2-2012/153961
- "3rd Generation Partnership Project; Technical Specification Group Radio Access Network; Evolved Universal Terrestrial Radio Access (E-UTRA); Physical layer procedures (Release 11)", 3GPP STANDARD; 3GPP TS 36.213, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. V11.4.0, 20 September 2013 (2013-09-20), pages 1-182, XP050712718, [retrieved on 2013-09-20]
- "3rd Generation Partnership Project; Technical Specification Group Radio Access Network; Evolved Universal Terrestrial Radio Access (E-UTRA); Multiplexing and channel coding (Release 11)", 3GPP STANDARD; 3GPP TS 36.212, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. V11.1.0, 20 December 2012 (2012-12-20), pages 1-82, XP050691222, [retrieved on 2012-12-20]
- '3RD GENERATION PARTNERSHIP PROJECT; TECHNICAL SPECIFICATION GROUP RADIO ACCESS NETWORK; EVOLVED UNIVERSAL TERRESTRIAL RADIO ACCESS (E-UTRA); PHYSICAL LAYER PROCEDURES (RELEASE 12)' 3GPP TS 36.213 V12.2.0 03 July 2014, pages 1 - 207, XP050774487
- CATT: 'PDSCH timing with TDD as PCell for FDD-TDD CA' 3GPP TSG RAN WG1 MEETING #75 R1-135072 01 November 2013, pages 1 - 4, XP050750572

## Description

### TECHNICAL FIELD

The present document describes methods and processes applicable to wireless communication systems, with a focus on HARQ process utilization in LTE.

### BACKGROUND ART

The Third Generation Partnership Project (3GPP) is constantly studying the evolution of the radio access schemes and radio networks for cellular mobile communications (hereinafter referred to as "Long Term Evolution (LTE) " or "Evolved Universal Terrestrial Radio Access (EUTRA)". In LTE, the Orthogonal Frequency Division Multiplexing (OFDM) scheme, which is a multi-carrier transmission scheme, is used as a communication scheme for wireless communication from a base station device (hereinafter also referred to as "base station apparatus", "base station", "eNB", "access point") to a mobile station device (herein after also referred to as "mobile station", "terminal station", "terminal station apparatus", "user equipment", "UE", "user") . The base station device has one or more serving cells configured (hereinafter also referred to as "cell"), and the communication with the mobile station device is performed through them. Also, the Single-Carrier Frequency Division Multiple Access (SC-FDMA) scheme, which is a single-carrier transmission scheme, is used as a communication scheme for wireless communication from a mobile station device to a base station device (uplink).

In 3GPP, studies are being performed to allow radio access schemes and radio networks which realize higher-speed data communication using a broader frequency band than that of LTE (hereinafter referred to as "Long Term Evolution-Advanced (LTE-A) " or "Advanced Evolved Universal Terrestrial Radio Access (A-EUTRA) ") to have backward compatibility with LTE. That is, a base station device of LTE-A is capable of simultaneously performing wireless communication with mobile station devices of both LTE-A and LTE, and a mobile station device of LTE-A is capable of performing wireless communication with base station devices of both LTE-A and LTE. The channel structure of LTE-A is the same as that of LTE, and it is described in Non Patent Literature (NPL) 1 and 2.

In LTE, the base station device transmits the control information through the Physical Downlink Control Channel (PDCCH) or the enhanced PDCCH (ePDCCH or EPDCCH) . The mobile stations monitor the PDCCH region looking for messages directed to them, more specifically a subspace of that region called "search space". The search space to monitor for messages specifically addressed to the individual mobile station devices is called User Search Space (USS) . The search space to monitor to look for messages addressed to a particular mobile station device or a group thereof is called Common Search Space (CSS). In the ePDCCH case, the mobile station devices monitor a subspace of the ePDCCH region looking for messages specifically addressed to the individual mobile station devices (ePDCCH USS). The base station device can configure the mobile station devices through the use of Radio Resource Control (RRC) messages, as described in NPL 3.

LTE uses HARQ (Hybrid Automatic Repeat Request) to manage the retransmission of messages. The base station device keeps for each transmitted message an HARQ process number (HARQ PN) that only gets released after the successful reception of an ACK (Acknowledgement) message from the mobile station device. Its omission or the reception of a NACK (Negative Acknowledgement) message triggers the retransmission of the message. Retransmissions in LTE are in the form of alternative non-systematic bits. The mobile station device identifies the message they complement through the HARQ PN. A similar procedure is employed for the uplink transmission of messages from the mobile station device to the base station device.

NPL 4 discloses Formats (1, 1A, 1B, 1D) with HARQ process number of 3 bits for FDD and 4 bits for TDD.

LTE allows two or more serving cells to be aggregated to increase the peak data rate a mobile station device is capable of achieving. Currently two serving cells are required to have the same frame structure in order to be aggregated together, i.e. TDD-TDD CA (Carrier Aggregation) or FDD-FDD CA. Note that in the rest of the document the terms TDD-TDD and FDD-FDD are used to refer to TDD-TDD CA and FDD-FDD CA respectively.

### Citation List

### Non Patent Literature

NPL 1: 3rd Generation Partnership Project; Technical Specification Group Radio Access Network; Evolved Universal Terrestrial Radio Access (E-UTRA) ; Physical Channels and Modulation (Release 11), 3GPP TS36.211 v11.4.0. (2013-09) URL:http://www.3gpp.org/ftp/Specs/html-info/36211.htm
NPL 2: 3rd Generation Partnership Project; Technical Specification Group Radio Access Network; Evolved Universal Terrestrial Radio Access (E-UTRA); Physical layer procedures (Release 11), 3GPP TS36.213 v11.4.0. (2013-09) URL:http://www.3gpp.org/ftp/Specs/html-info/36213.htm
NPL 3: 3rd Generation Partnership Project; Technical Specification Group Radio Access Network; Evolved Universal Terrestrial Radio Access (E-UTRA); Radio Resource Control (RRC) (Release 11), 3GPP TS36.331 v11.5.0. (2013-09) URL:http://www.3gpp.org/ftp/Specs/html-info/36331.htm
NPL 4: "3rd Generation Partnership Project; Technical Specification Group Radio Access Network; Evolved Universal Terrestrial Radio Access (E-UTRA); Multiplexing and channel coding (Release 11)",3GPP STANDARD; 3GPP TS 36.212, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. V11.1.0, 20 December 2012 (2012-12-20)

### DISCLOSURE OF INVENTION

### Technical Problem

In the related art a serving cell is capable of addressing a limited number of simultaneous HARQ processes. This limit is made to coincide with the maximum number of simultaneous HARQprocesses that there can be at any time, the limit being different for an FDD serving cell and for a TDD serving cell. Due to having frequency multiplexed uplink and downlink bands, an FDD serving cell can deal with HARQ processes in a more predictable and quick manner than a TDD serving cell, which presents the uplink and downlink subframes multiplexed in time. This results in FDD serving cells needing to simultaneously handle fewer HARQ processes than TDD serving cells.

However, in some cases, the maximum number of simultaneous HARQ processes that can occur exceeds the capacity that is currently assumed.

The present invention has been made in view of the above-described points, and an object thereof is to provide a mobile station device, and a base station device with an enlarged HARQ process capacity that enables a serving cell to properly address the HARQ processes that can simultaneously occur in a cell aggregation scenario.

### Solution to Problem

### Advantageous Effects of Invention

According to the present invention, a serving cell is capable of properly addressing the HARQ processes that can occur simultaneously in a cell aggregation scenario.

### BRIEF DESCRIPTION OF THE DRAWINGS

[Fig. 1] Fig. 1 is a conceptual diagram of a wireless communication system according to the present invention.
[Fig. 2] Fig. 2 is a diagram illustrating an example of a downlink OFDM structure construction according to the present invention.
[Fig. 3] Fig. 3 is a diagram illustrating an example of a legacy physical resource block with some of its defined reference signals according to the present invention.
[Fig. 4] Fig. 4 is a diagram illustrating an example of an uplink OFDM structure construction according to the present invention.
[Fig. 5] Fig. 5 is a diagram illustrating the allocation of physical uplink resources to PUCCH and PUSCH according to the present invention.
[Fig. 6] Fig. 6 is a diagram illustrating an example of the configuration of radio frames in a TDD wireless communication system according to the present invention.
[Fig. 7] Fig. 7 is a table illustrating the uplink-downlink configurations that are possible in a TDD wireless communication system according to the present invention.
[Fig. 8] Fig. 8 is a table illustrating an example downlink association set for HARQ ACK/NACK transmission in a TDD wireless communications system.
[Fig. 9] Fig. 9 is a table indicating the number of simultaneous HARQ processes that a base station device is expected to be able to handle for each TDD UL/DL configuration in a TDD wireless communications system.
[Fig. 10] Fig. 10 is a diagram illustrating an example of indication of flexible subframes according to the present invention.
[Fig. 11] Fig. 11 is a diagram illustrating an example of mobile station device composition according to the present invention.
[Fig. 12] Fig. 12 is a diagram illustrating an example of base station device composition according to the present invention.
[Fig. 13] Fig. 13 is a table illustrating an example of UE-specific and common search space configuration for PDCCH in a wireless communication system according to the present invention.
[Fig. 14] Fig. 14 is a diagram illustrating an example of mapping of a physical EPDCCH-PRB-set to its logical ECCEs according to the present invention.
[Fig. 15] Fig. 15 is a table illustrating an example of UE-specific search space configuration for ePDCCH in a wireless communication system according to the present invention.
[Fig. 16] Fig. 16 is a diagram illustrating an example of cell aggregation processing according to the present invention.
[Fig. 17] Fig. 17 is a diagram illustrating an example of a TDD-FDD aggregated wireless communications system according to the present invention.
[Fig. 18] Fig. 18 is a table indicating the number of simultaneous HARQ processes that a TDD base station device is expected to be able to handle for each TDD UL/DL configuration in a TDD-FDD wireless communications system with an FDD PCell according to the present invention.
[Fig. 19] Fig. 19 is a table illustrating an example downlink association set for HARQACK/NACK transmission in a TDD-FDD wireless communications system with a TDD PCell according to the present invention.
[Fig. 20] Fig. 20 is a table indicating the number of simultaneous HARQ processes that an FDD base station device is expected to be able to handle for each TDD UL/DL configuration in a TDD-FDD wireless communications system with a TDD PCell according to the present invention.
[Fig. 21] Fig. 21 is a flow chart diagram describing the process by which a mobile station device educes the DCI assumptions for PDCCH/EPDCCH monitoring to be applied to the search space according to the present invention.

### BEST MODE FOR CARRYING OUT THE INVENTION

Hereinafter, an embodiment of the present invention will be described in detail with reference to the drawings. First, physical channels according to the present invention will be described.

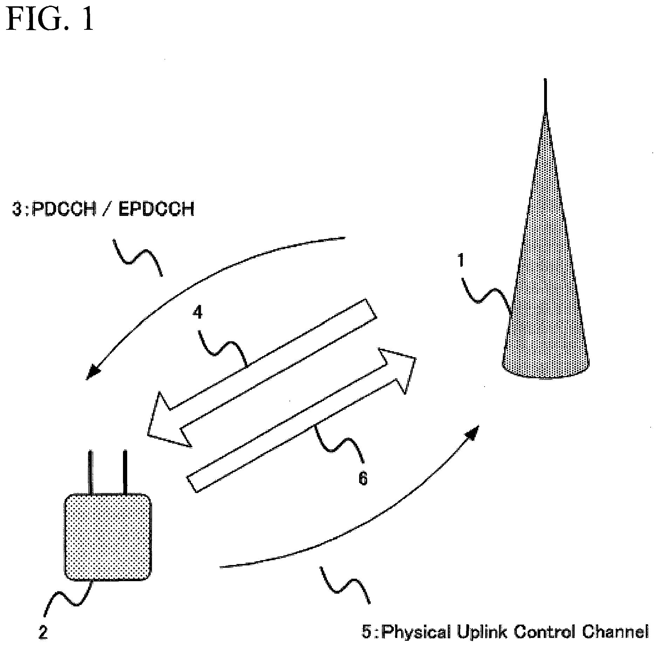

FIG. 1 shows an illustrative communications system. The base station device 1 transmits control information to the mobile station device 2 through Physical Downlink Control Channel (PDCCH) or Enhanced PDCCH (ePDCCH) 3. This control information governs the downlink transmission of data 4 and the uplink transmission of data 6.

The mobile station device 2 transmits the HARQ (Hybrid Automatic Repeat Request) information related to the message data 4 to the base station device 1 through the Physical Uplink Control Channel with an appropriate timing. The HARQ functionality ensures delivery between peer entities at Layer 1. The HARQ within the MAC sublayer has the following characteristics: N-process Stop-And-Wait; and HARQ transmits and retransmits transport blocks. Additionally, in the downlink: asynchronous adaptive HARQ; uplink ACK/NAKs in response to downlink (re) transmissions are sent on PUCCH or PUSCH; PDCCH signals the HARQ process number and if it is a transmission or retransmission; and retransmissions are always scheduled through PDCCH in the downlink.
Alternatively, in the uplink: synchronous HARQ; maximum number of retransmissions configured per UE (as opposed to per radio bearer) ; downlink ACK/NAKs in response to uplink (re) transmissions are sent on PHICH; measurement gaps are of higher priority than HARQ retransmissions (whenever an HARQ retransmission collides with a measurement gap, the HARQ retransmission does not take place). Additionally, the HARQ operation in uplink is governed by the following principles (summarized in Table 9.1-1) : (1) regardless of the content of the HARQ feedback (ACK or NACK), when a PDCCH for the UE is correctly received, the UE follows what the PDCCH asks the UE to do i.e. perform a transmission or a retransmission (referred to as adaptive retransmission) ; (2) when no PDCCH addressed to the C-RNTI of the UE is detected, the HARQ feedback dictates how the UE performs retransmissions: NACK (the UE performs a non-adaptive retransmission i.e. a retransmission on the same uplink resource as previously used by the same process); or ACK (the UE does not perform any UL (re) transmission and keeps the data in the HARQ buffer. A PDCCH is then required to perform a retransmission i.e. a non-adaptive retransmission cannot follow).

The base station device 1 assigns an HARQ process number (HARQ PN) to each new data 4 message that is transmitted to the mobile station device 2. A reception of an HARQ-ACK message from the mobile station device 2 allows the base station device 1 to release the HARQ PN used for the corresponding message and reuse it for new messages. In case of a retransmission, the base station device 1 keeps the HARQ PN associated to the message and uses it as a means to indicate to the mobile station device 2 to which message the retransmitted data corresponds.

Similarly, the base station device 1 transmits the HARQ information related to the message data 6 to the mobile station device 2 through the PDCCH or EPDCCH with an appropriate timing, more particularly through the PHICH (Physical HARQ Indicator CHannel).

The information message transmitted in the PDCCH and in the ePDCCH is scrambled with one of many RNTI (Radio Network Temporary Identifier). The used scrambling code helps to differentiate the function of the message, for example, there is an RNTI for paging (P-RNTI), random access (RARNTI), cell related operations such as scheduling (C-RNTI), semi-persistent scheduling (SPS-RNTI), system information (SI-RNTI), etc.

The base station device 1 and the mobile station device 2 communicate with each other according to a series of predefined parameters and assumptions corresponding to a selected transmission mode (TM). Transmission modes 1 to 10 have been defined to present a plurality of options covering different scenarios and use cases. For example, TM 1 corresponds to single antenna transmission, TM 2 to transmit diversity, TM 3 to open-loop spatial multiplexing, TM 4 to closed-loop spatial multiplexing, TM 5 to multi-user MIMO (Multiple Input Multiple Output), TM 6 to single layer codebook-based precoding, TM 7 to single-layer transmission using DM-RS, TM 8 to dual-layer transmission using DM-RS, TM 9 to multi-layer transmission using DM-RS, and TM 10 to eight layer transmission using DM-RS.

For a given serving cell, if the mobile station device is configured to receive PDSCH data transmissions according to transmission modes 1-9, if the mobile station device is configured with a higher layer parameter epdcch-StartSymbolr11 the starting OFDM symbol *l_{EPDCCHstart}* for EPDCCH is determined by this parameter. Otherwise, the starting OFDM symbol for EPDCCH *l_{EPDCCHstart}* is given by the CFI (Control Format Indicator) present in the PCFICH (Physical Control Format Indicator Channel) present in the PDCCH region when there are more than ten resource blocks present in the bandwidth, and *l_{EPDCCHstart}* is given by the CFI value + 1 in the subframe of the given serving cell when there are ten or fewer resource blocks present in the bandwidth.

For a given serving cell, if the UE is configured via higher layer signalling to receive PDSCH data transmissions according to transmission mode 10, for each EPDCCH-PRB-set, the starting OFDM symbol for monitoring EPDCCH in subframe *k* is determined from the higher layer parameter pdsch-Startr11 as follows:
- If the value of the parameter pdsch-Start-r11 is 1, 2, 3 or 4 *l'_{EPDCCHstart}* is given by that parameter.
- Otherwise, *l'_{EPDCCHstart}* is given by the CFI value in subframe *k* of the given serving cell when there are more than ten resource blocks present in the bandwidth, and *l'_{EPDCCHstart}* is given by the CFI value + 1 in subframe *k* of the given serving cell when there are ten or fewer resource blocks present in the bandwidth.
- If subframe *k* is indicated by the higher layer parameter mbsfn-SubframeConfigList-r11 or if subframe *k* is subframe 1 or 6 for TDD operation *l_{EPDCCHstart}* = min (2, *l'_{EPDCCHstart}*)
- Otherwise *l_{EPDCCHstart}* = *l'_{EPDCCHstart}.*

Different TMs are transmitted in different antenna ports. Two antenna ports are said to be quasi co-located if the large-scale properties of the channel over which a symbol on one antenna port is conveyed can be inferred from the channel over which a symbol on the other antenna port is conveyed. The large-scale properties include one or more of delay spread, Doppler spread, Doppler shift, average gain, and average delay. A mobile station device does not assume that two antenna ports are quasi co-located unless specified otherwise by the base station device.

A mobile station device configured in transmission mode 10 for a serving cell is configured with one of two quasi co-location types for the serving cell by higher layer parameter qcl-Operation to decode the PDSCH or the ePDCCH.
- Type A: the mobile station device may assume the antenna ports 0-3 (corresponding to CRS), 7-22 (UE-specific RS and CSI-RS), and 107-110 (corresponding to DM-RS associated with ePDCCH) of a serving cell are quasi collocated with respect to delay spread, Doppler spread, Doppler shift, and average delay.
- Type B: the mobile station device may assume the antenna ports 15-22 (corresponding to CSI-RS resource configuration identified by the higher layer parameter qcl-CSI-RS-ConfigNZPId-r11), the antenna ports 7-14 (UE-specific RS), and the antenna ports 107-110 (corresponding to DM-RS associated with ePDCCH) are quasi co-located with respect to delay spread, Doppler spread, Doppler shift, and average delay.

A mobile station configured in transmission mode 10 for a given serving cell can be configured with up to 4 parameter sets by the base station device to decode PDSCH or ePDCCH. The mobile station device uses the parameter set according to the value of the "PDSCH RE Mapping and Quasi-Co-Location Indicator" field (PQI) for determining the PDSCH/ePDCCH RE mapping and for determining the antenna port quasi co-location if the mobile station is configured with Type B quasi co-location type. PQI acts as an index for the 4 configurable parameter sets.

The parameter set referenced by PQI includes crs-PortsCount-r11 (number of antenna ports), crs-FreqShift-r11 (frequency shift of the CRS), mbsfn-SubframeConfigList-r11 (definition of the subframes that are reserved for MBSFN in downlink), csi-RS-ConfigZPId-r11 (identification of a CSI-RS resource configuration for which the mobile station device assumes zero transmission power), pdsch-Start-r11 (starting OFDM symbol) and qcl-CSI-RS-ConfigNZPId-r11 (CSI-RS resource that is quasi co-located with the PDSCH/ePDCCH antenna ports).

In a typical network the coverage of multiple base station devices overlaps in some areas. A system may allow for a mobile station device to be served by any of these base station devices in a transparent way, without the need for the mobile station device to perform a handover to a base station device prior to receiving from it. The base station device in the serving cell configures through RRCmessages the quasi co-location parameter set that matches the conditions of the overlapping base station devices. The overlapping base station devices can transmit to the mobile station device with no interruption of service if the mobile station device switches to the right PQI parameter set.

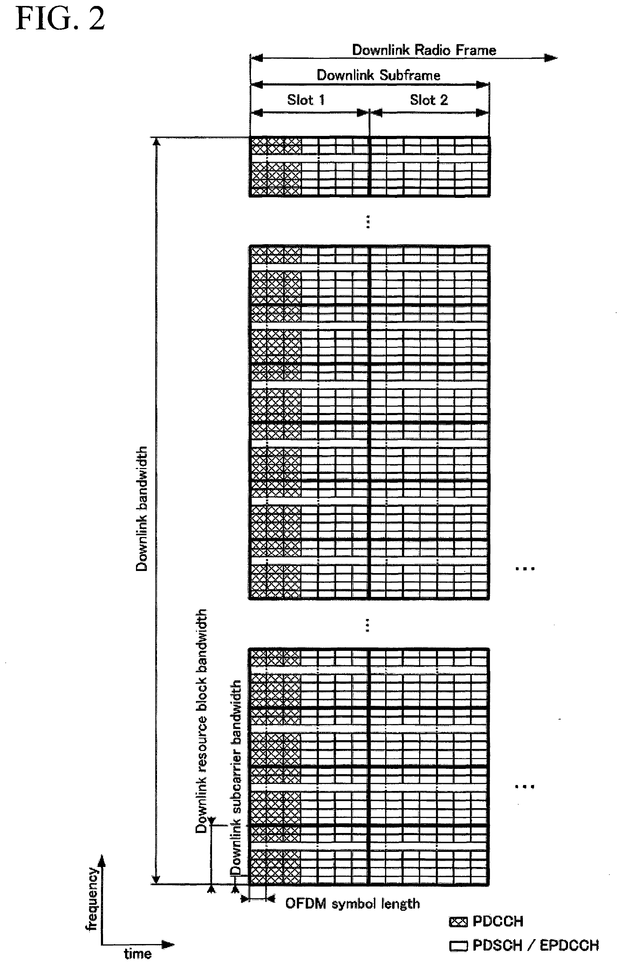

FIG. 2 illustrates a construction example of a downlink subframe. The downlink transmission is performed through OFDMA. A downlink subframe has a length of 1 ms, and can be broadly thought as divided into PDCCH, ePDCCH and PDSCH. Each subframe is composed of two slots. Each slot has a length of 0.5 ms. A slot is further divided into a plurality of OFDM symbols in the time domain, each one of them being composed of a plurality of subcarriers in the frequency domain. In an LTE system one RB includes twelve subcarriers and seven (or six) OFDM symbols. Each subcarrier of each OFDM symbol is a Resource Element (RE). The grouping of all the REs present in a slot composes a Resource Block (RB) .
The grouping of the two physically consecutive resource blocks present in a subframe composes a Physical Resource Block pair (PRB pair). A PRB pair (2 slots) comprises 12 subcarriers × 14 OFDM symbols in the case of normal CP (cyclic prefix), and 12 subcarriers x 12 OFDM symbols in the case of extended CP. The PDCCH region occupies the REs of the first 1 to 4 OFDM symbols of the frame.

The PDCCH region of a PRB pair spans the first 1, 2, 3 or 4 OFDM symbols. The rest of the OFDM symbols are used as the data region (PDSCH, Physical Downlink Shared channel).
The PDCCH is sent in the antenna ports 0-3, along with the CRS.

The CRS are allocated to REs across the PRB according to a pattern that is independent of the length of the PDCCH region and the data region. The number of CRS in a PRB depends on the number of antennas that are configured for the transmission.

The Physical Control Format Indicator Channel (PCFICH) is allocated in the first OFDM symbol to REs that are not allocated to CRS. The PCFICH is composed of 4 Resource Element Group (REG), each REG being composed of 4 REs. It contains a value from 1 to 3 (or 2 to 4 depending on the bandwidth), corresponding to the length of the physical downlink control -channel (PDCCH).

The Physical Hybrid-ARQ Indicator Channel (PHICH, where ARQ stands for Automatic Repeat-reQuest) is allocated in the first symbol to REs that are not allocated to CRS or PCFICH.
It transmits the HARQ ACK/NACK signals for uplink transmission. The PHICH is composed of 1 REG, and is scrambled in a cell-specific manner. A plurality of PHICHs can be multiplexed in the same REs and conform a PHICH group. A PHICH group is repeated 3 times to obtain diversity gain in the frequency and/or time region.

The PDCCH is allocated in the first 'n' OFDM symbols (where 'n' is indicated by the PCFICH). The PDCCH contains the Downlink Control Information (DCI) messages, which may contain downlink and uplink scheduling information, downlink ACK / NACK, power control information, etc. The DCI is carried by a plurality of Control Channel Elements (CCE) . A CCE is composed of 4 consecutive REs in the same OFDM symbol that are not occupied by CRS, the PCFICH, or the PHICH.

The CCEs are numbered starting from 0 in ascending order first of frequency and second of time. First the lowest frequency RE in the first OFDM symbol is considered.
If that RE is not occupied by other CCE, CRS, PHICH, or PCFICH, it is numbered. Otherwise the same RE corresponding to the next OFDM symbol is evaluated. Once all OFDM symbols have been considered the process is repeated for all REs in frequency order.

The REs that are not occupied by a reference signal in the data region can be allocated to ePDCCH or Physical Downlink Shared Cannel (PDSCH).

The UE monitors a set of PDCCH candidates, where monitoring implies attempting to decode each of the PDCCHs in the set according to all monitored DCI formats. The set of PDCCH candidates to monitor are defined in terms of Search Spaces (SS), where a search space *Sₖ^{(L)}* at a given aggregation level L is defined by a set of PDCCH candidates.

Each UE monitors two search spaces, the UE-specific Search Space (USS) and the Common Search Space (CSS). The USS carries information that is directed exclusively to the UE, therefore only the pertinent UE can decode it. The USS is different for each UE. USS of two or more mobile station devices can be partially overlapped. The CSS contains general information that is directed to all UEs. All UEs monitor the same common search space and are able to decode the information therein.

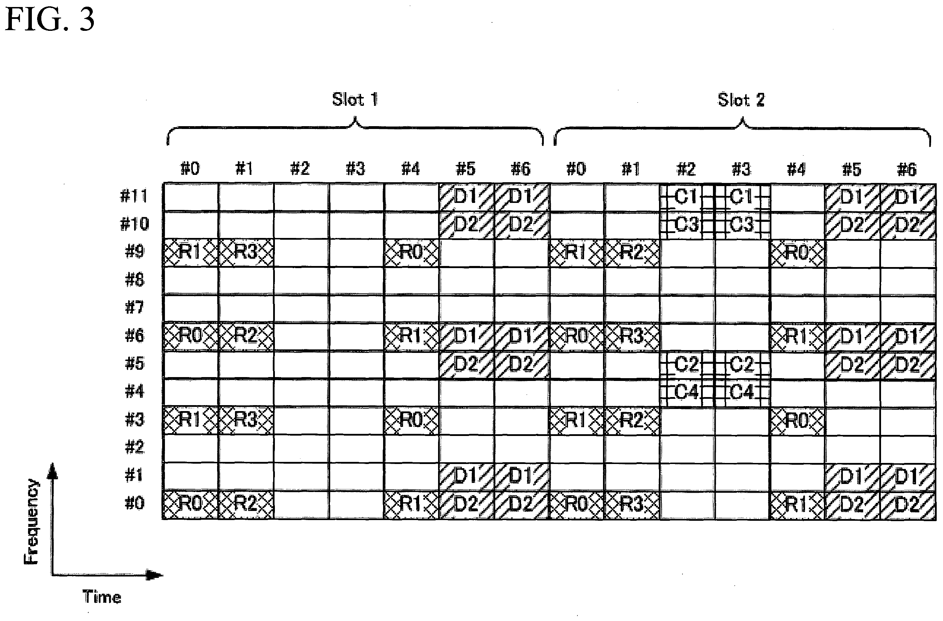

FIG. 3 illustrates an example downlink PRB. Some of the REs of the PRB are occupied by reference signals . The different reference signals are associated to different antenna ports . The term "antenna port" is used to convey the meaning of signal transmission under identical channel conditions. For example, signals sent in the antenna port 0 suffer the same channel conditions, which may differ from those of antenna port 1.

R0-R3 correspond to Cell-specific RS (CRS), which are sent in the same antenna ports as the PDCCH (antenna ports 0-3) and are used to demodulate the data transmitted in the PDCCH, and also to demodulate the data transmitted in the PDSCH in some transmission modes (TM).

D1-D2 correspond to DM-RS associated with ePDCCH. They are sent in the antenna ports 107-110 and serve as demodulation reference signal for the mobile station device to demodulate the ePDCCH therein. The UE-specific reference signals are transmitted in the same REs when configured (not at the same time). The UE-specific reference signals are transmitted in ports 7-14 and serve as demodulation reference signal for the mobile station device to demodulate the PDSCH therein.

C1-C4 correspond to CSI-RS (Channel State Information RS) . They are sent in the antenna ports 15-22 and enable the mobile station device to measure the channel conditions.

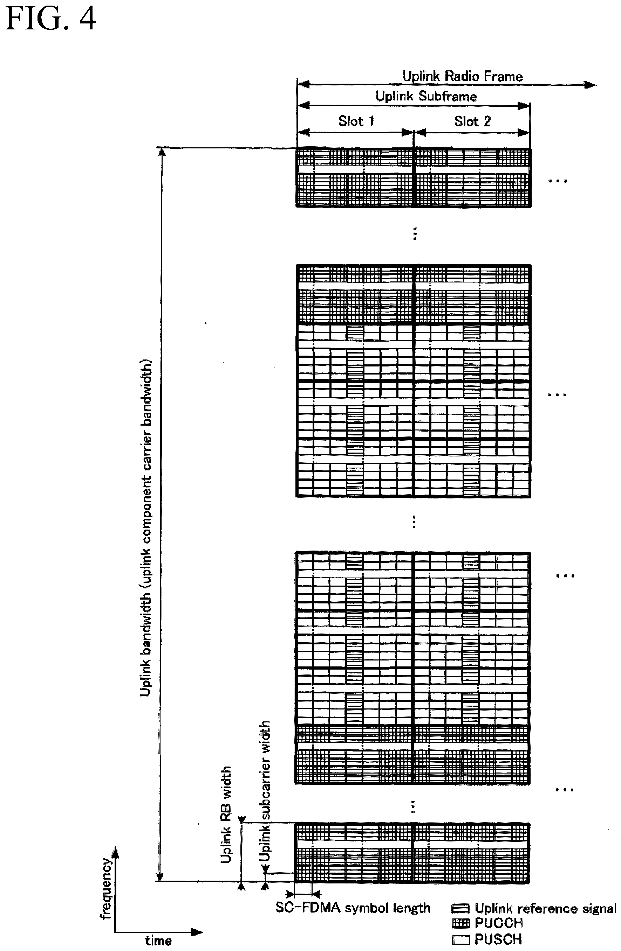

FIG. 4 illustrates a construction example of an uplink subframe. The uplink transmission is performed through SCFDMA (Single Carrier Frequency Division Multiple Access).
The uplink resources are allocated to physical channels such as the PUSCH (Physical Uplink Shared Channel) and the PUCCH (Physical Uplink Control Channel). In addition, uplink reference signals are transmitted in part of the resources that would correspond to the PDSCH and the PUCCH. An uplink wireless frame is composed of PRB pairs. The PRB pair is the basic schedulable unit, with a predefined frequency width (the width of a resource block) and time length (2 slots = 1 subframe).

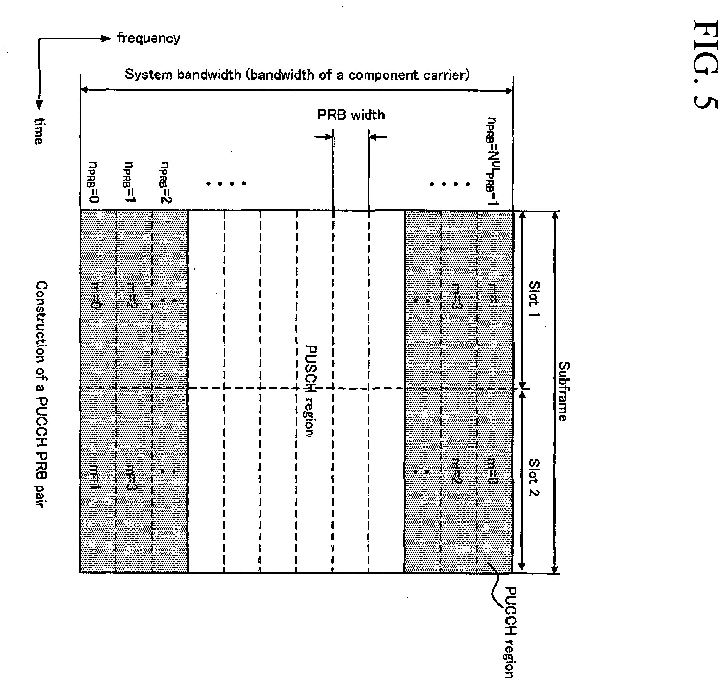

FIG. 5 illustrates the allocation of physical uplink resources to PUCCH and PUSCH. The PUCCH PRB pairs consist of two slots with different frequency allocations. The PUCCH element m is allocated to the PUCCH PRB pair with index m, where m = 0, 1, 2, 3 ...

The transmission of data in LTE can be done through frame structure type 1 (FDD) and/or through frame structure type 2 (TDD) .

For FDD, 10 subframes are available for downlink transmission and 10 subframes are available for uplink transmissions in each radio frame. Uplink and downlink transmissions are separated in the frequency domain. In half-duplex FDD operation, the UE cannot transmit and receive at the same time, while there are no such restrictions in full-duplex FDD.

Amobile station device connected to an FDD base station device receives in a subframe *n* a PDCCH message indicating the scheduling of a downlink PDSCH. The PDCCH message contains among other information the PRBs in which the PDSCH is located and the HARQ process number assigned to it. The mobile station device attempts to decode it and, following the FDD HARQ timing, sends an HARQ ACK/NACK indication to the base station device in the subframe *n+4* indicating that the reception was successful (ACK) or failed (NACK). If the base station device receives an HARQ-ACK indication, the base station device releases the HARQ process number, which can then be used for a subsequent PDSCH. Otherwise, if the base station receives an HARQ-NACK indication (or no indication) the base station device will attempt to transmit the PDSCH to the mobile station device again in the subframe *n+8.* The retransmitted message keeps the same HARQ process number, allowing the mobile station device to combine the new retransmission with the previous received data to increase the likelihood of a successful reception. Therefore, for FDD, there shall be a maximum of 8 downlink HARQ processes per serving cell.

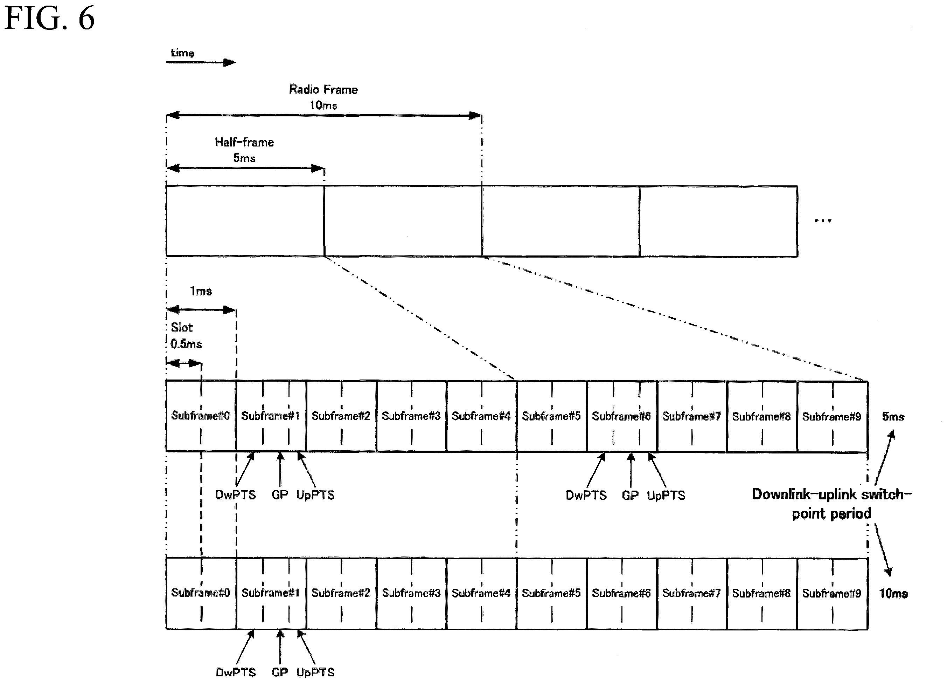

FIG. 6 illustrates the composition of an LTE radio frame in the Time Division Duplex mode (TDD).

An LTE radio frame has a length of 10 ms, and is composed of 10 subframes.

Each subframe can be used for downlink or uplink communication as configured by the eNB. The switch from downlink to uplink transmission is performed through a special subframe that acts as switch-point. Depending on the configuration a radio frame can have 1 special subframe (switch-point periodicity of 10 ms) or 2 special subframes (switch-point periodicity of 5 ms).

In most cases subframes #1 and #7 are the "special subframe", and include the three fields DwPTS (Downlink Pilot Time Slot), GP (Guard Period) and UpPTS (Uplink Pilot Time Slot). DwPTS spans a plurality of OFDM symbols and is dedicated to downlink transmission. GP spans a plurality of OFDM symbols and is empty. GP is longer or shorter depending on the system conditions to allow for a smooth transition between downlink and uplink. UpPTS spans a plurality of OFDM symbols and is dedicated to uplink transmission. DwPTS carries the Primary Synchronization Signal (PSS) . Subframes #0 and #5 carry the Secondary Synchronization Signal (SSS), and therefore cannot be configured for uplink transmission.
Subframe #2 is always configured for uplink transmission.

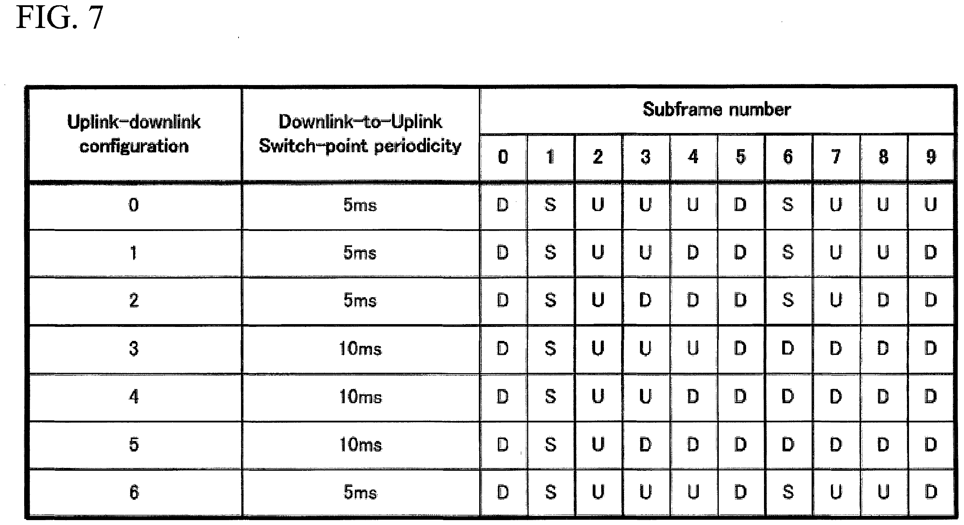

FIG. 7 lists the possible Uplink - Downlink configurations, where "U" denotes that the subframe is reserved for uplink transmission, "D" denotes that the subframe is reserved for downlink transmission, and "S" denotes the special subframe. The base station device transmits to the mobile station device the index of the Uplink - Downlink configuration to be used.

The base station device can transmit a second Uplink-Downlink configuration index. The subframes in which both Uplink-Downlink have the same configuration are handled as described above (they are indistinctly referred to as legacy subframes in the rest of the documents). The subframes in which both Uplink-Downlink configurations differ are flexible subframes, which are subframes that can be used for either uplink or downlink. For example, Uplink-Downlink configuration 1 is configured as U, while Uplink-Downlink configuration 2 is configured as D or S.

Even though uplink-downlink configuration 0 through 6 as currently defined are shown in the figure, any embodiment of this invention is also applicable to a potential new uplink-downlink configuration. For example, a new uplink-downlink configuration in which all the subframes are defined as downlink could be introduced and it would be readily applicable to any embodiment of the present invention. The exemplary new uplink-downlink configuration could be named uplink-downlink configuration 7, or it may be given a distinctly different name to help differentiate it from the other uplink-downlink configurations. In the rest of the documents there are instances in which a reference is made to a range of uplink-downlink configurations. In those cases a potential new uplink-downlink configuration as described above is not precluded from being part of the range. For example, the expression "uplink-downlink configuration 1-6" is equivalent in most cases to "uplink-downlink configuration 1-7" for the purposes of this invention.

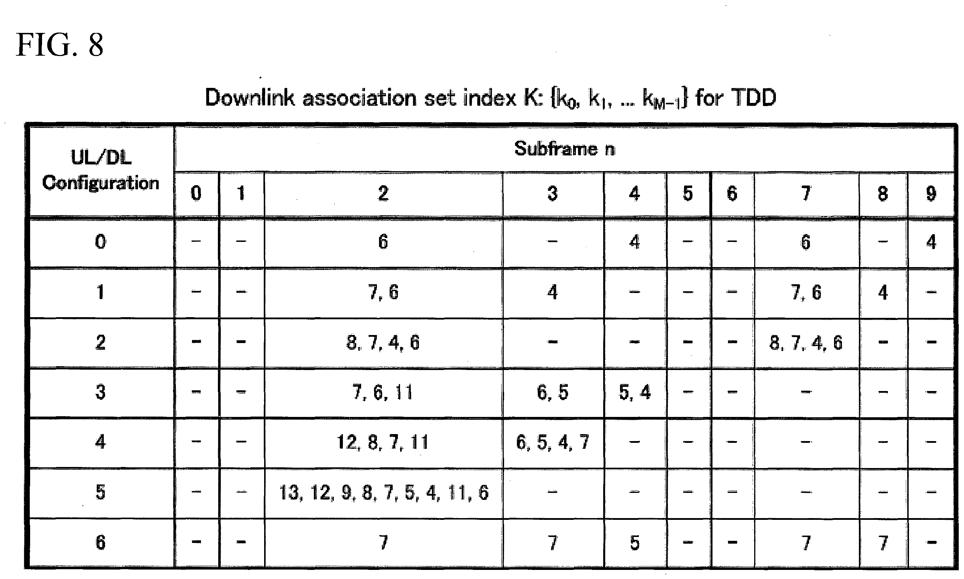

FIG. 8 shows the downlink association set table used for HARQ indication in a TDD serving cell. This table is referred to as the legacy downlink association set in the document. For TDD HARQ-ACK multiplexing and subframe *n* with *M* > 1 and one configured serving cell, where *M is* the number of elements in the set *K* defined in the table, denote *n⁽¹⁾_{PUCCH,i}* as the PUCCH resource derived from subframe *n-ki* and HARQ-ACK (i) as the ACK/NACK/DTX response from subframe *n-ki,* where *ki* ∈ *K* as defined in the table and 0 ≤ *i* ≤ *M-1.* For TDD, if a mobile station device is configured with one serving cell, or if the mobile station device is configured with more than one serving cell and the TDD UL/DL configuration of all the configured serving cells is the same, the mobile station device shall upon detection of a PDSCH transmission or a PDCCH/EPDCCH indicating downlink SPS release within subframe(s) *n-k,* where *kᵢ* ∈ K intended for the UE and for which HARQ-ACK response shall be provided, transmit the HARQ-ACK response in UL subframe *n.* For TDD, if a mobile station device is configured with more than one serving cell and the TDD UL/DL configuration of at least two configured serving cells is not the same, a DL-reference configuration is defined, and the mobile station device shall upon detection of a PDSCH transmission or a PDCCH/EPDCCH indicating downlink SPS release within subframe(s) *n-k* for serving cell *c,* where *k* ∈ *K_{c}* intended for the mobile station device and for which HARQ-ACK response shall be provided, transmit the HARQ-ACK response in UL subframe *n,* wherein set *K_{c}* contains values of *k* ∈ *K* such that subframe *n-k* corresponds to a DL subframe or a special subframe for serving cell *c, K* defined in the (where "UL/DL configuration" in the table refers to the DLreference UL/DL configuration) is associated with subframe *n. M_{c}* is the number of elements in set *K_{c}* associated with subframe *n* for serving cell *c.* For example, for UL/DL Configuration 1, in the uplink subframe #2 a mobile station device is expected to send the HARQ ACK/NACK indication corresponding to the subframe *n*-7 and *n*-6 in this order (subframes #5 and #6 of the previous radio frame) . The HARQACK for a PDSCH transmission scheduled by a PDCCH/EPDCCH with a first DCI format size is transmitted based on the legacy downlink association set.

In an embodiment of the invention, if an FDD serving cell is a PCell and a TDD serving cell is a SCell, the PCell follows the HARQ timing based on the legacy downlink association set, while the SCell sends the HARQ indication in the subframe *n+4* through the PCell PUCCH, where *n* is the subframe in which the reception of the PDSCH took place.

For TDD HARQ-ACK bundling and a subframe n with M = 1, the mobile station device shall generate one or two HARQ-ACK bits by performing a logical AND operation per codeword across MDL subframes associated with a single UL subframe, of all the corresponding *U_{DAI}* + *N_{SPS}* individual PDSCH transmission HARQ-ACKs and individual ACK in response to received PDCCH/EPDCCH indicating downlink SPS release, where M is the number of elements in the set *K* defined in the table. The mobile station device shall detect if at least one downlink assignment has been missed, and for the case that the UE is transmitting on PUSCH the mobile station device shall also determine the parameter *N_{bundled}.*

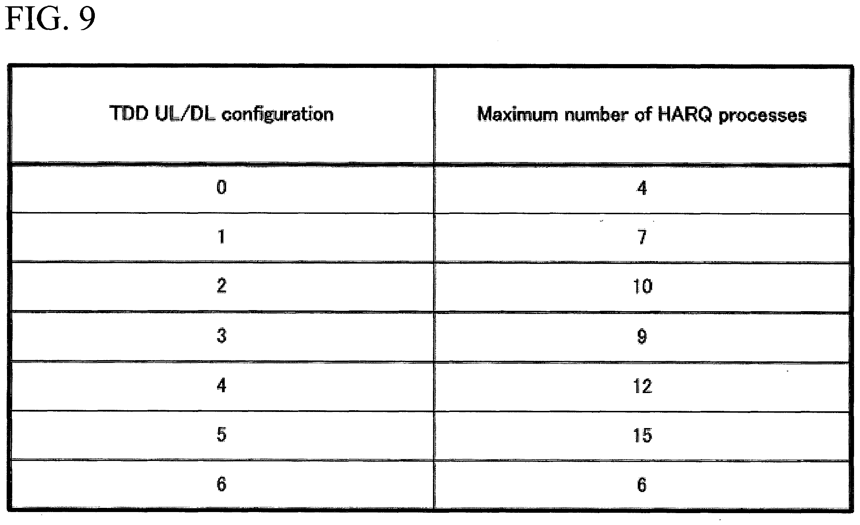

FIG. 9 shows a table with the number of HARQ processes that the base station device is expected to be able to handle simultaneously for each UL/DL Configuration. For TDD, if a UE is configured with one serving cell, or if the UE is configured with more than one serving cell and the TDD UL/DL configuration of all the configured serving cells is the same, the maximum number of downlink HARQ processes per serving cell shall be determined by the UL/DL configuration.
For TDD, if a UE is configured with more than one serving cell and if the TDD UL/DL configuration of at least two configured serving cells is not the same, the maximum number of downlink HARQ processes for a serving cell shall be determined as indicated in the table, wherein the "TDD UL/DL configuration" in the table refers to the DL-reference UL/DL configuration for the serving cell. This figure is referred to as legacy table in the document.

If the mobile station device is configured with more than one serving cell and if at least two serving cells have different UL/DL configurations, *M_{DL_HARQ}* is the maximum number of DL HARQ processes as defined in the table for the DLreference UL/DL configuration of the serving cell.
Otherwise, *M_{DL_HARQ}* is the maximum number of DL HARQ processes.

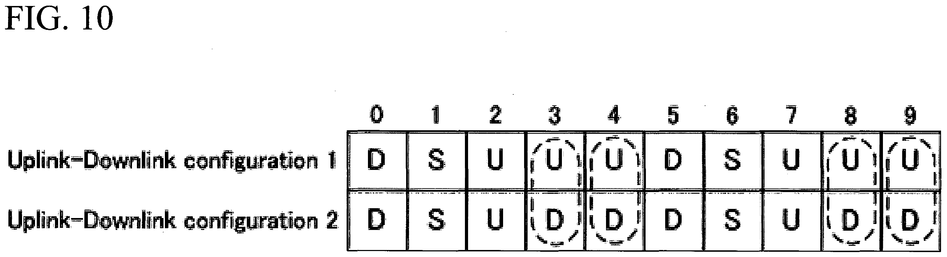

FIG. 10 illustrates an example method in which the base station device can indicate the uplink-downlink configuration that involves flexible subframes.

In this example, the base station device transmits two uplink-downlink configuration indexes. The first one corresponds to the configuration #0, in which there are defined the highest number of uplink subframes. The second configuration (DL reference configuration) is chosen by the base station device to indicate the flexible subframes. The subframes that are configured as uplink in the first configuration and as downlink in the second configuration are the flexible subframes.

In the example, the second index corresponds to the configuration #2, in which four of the subframes that are marked as uplink in the configuration #1 are marked as downlink, and therefore they are flexible subframes (more precisely, subframes #3, #4, #8, and #9).

Mobile station devices that are not capable of being configured with a DL reference configuration are also referred to as legacy mobile station devices in the document. Legacy mobile station devices consider the flexible subframes to be configured for uplink. Legacy mobile station devices do not expect PDCCH to be sent on these subframes and do not monitor the USS or the CSS.

The actual direction of the flexible subframe (uplink or downlink) is given implicitly. A mobile station device that is compatible with flexible subframes assumes that the direction is downlink if no uplink scheduling grant is given to him in that subframe . In that case, the mobile station device monitors the ePDCCH of that subframe. If the mobile station device has an uplink scheduling grant in that subframe it assumes no downlink ePDCCH and proceeds with the uplink data transmission.

A flexible subframe that is immediately after another flexible subframe that has been configured for downlink transmission is not configured as uplink. A guard period is necessary for switching from downlink to uplink, and that guard period is only defined in the special subframes.

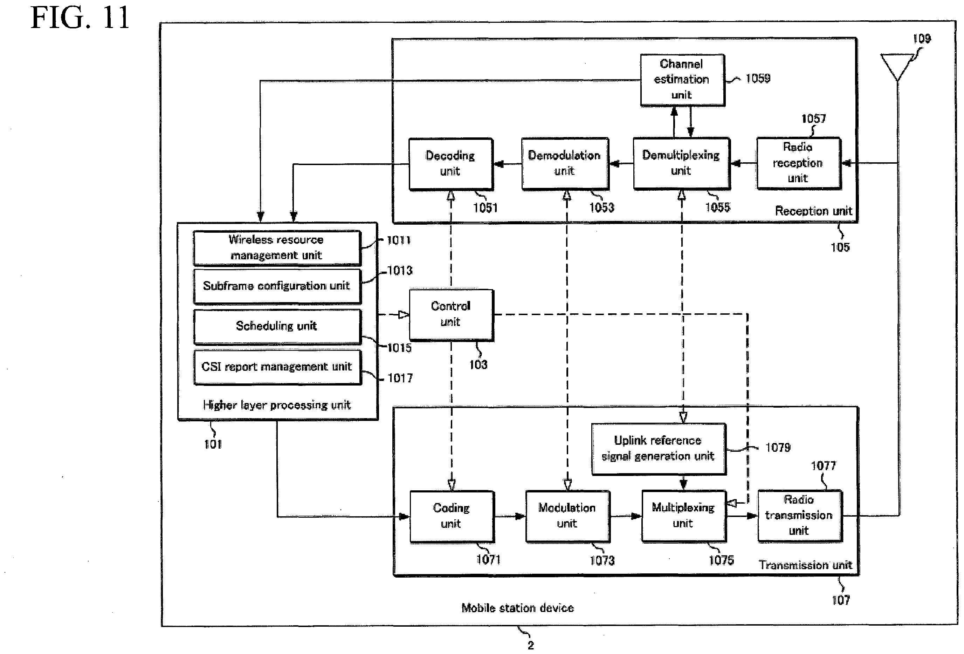

FIG. 11 illustrates the block diagram of a mobile station device that corresponds with the mobile station device 2. As shown in the figure, the mobile station device includes a higher layer processing unit 101, a control unit 103, a reception unit 105, a transmission unit 107, and an antenna unit 109. The higher layer processing unit 101 supports being configured with more than one cell, one of them as a primary cell and the rest of the cells as secondary cells, and includes a wireless resource management unit 1011, a subframe configuration unit 1013, a scheduling unit 1015, and a CSI report management unit 1017. The reception unit 105 includes a decoding unit 1051, a demodulation unit 1053, a demultiplexing unit 1055, a radio reception unit 1057, and a channel estimation unit 1059. The transmission unit 107 includes a coding unit 1071, a modulation unit 1073, a multiplexing unit 1075, a radio transmission unit 1077, and an uplink reference signal creation generation 1079.

The higher layer processing unit 101 generates control signal to control the operation of the reception unit 105 and the transmission unit 107 and outputs them to control unit 103. In addition, the upper layer processing unit 101 processes the operations related to the MAC layer (Medium Access Control), the PDCP layer (Packet Data Convergence Protocol), the RLC layer (Radio Link Control), and the RRC layer (Radio Resource Control).

The wireless resource management unit 1011 in the higher layer processing unit 101 manages the configuration related to its own operation. In addition, the wireless resource management unit generates the data that is transmitted in each channel and outputs this information to the transmission unit 107.

The subframe configuration unit 1013 in the higher layer processing unit 101 manages the uplink reference signal configuration, the downlink reference signal configuration, and the transmission direction configuration.
The subframe configuration unit 1013 configures subframe sets of at least two subframes.

The scheduling unit 1015 in the higher layer processing unit 101 reads the scheduling information contained in the DCI messages received via the reception unit 105 and outputs control information to control unit 103, which in turn sends control information to reception unit 105 and transmission unit 107 to perform the required operations. The scheduling unit 1015 assumes, for DCI received from an FDD secondary cell, a first DCI format size in a case that an FDD cell is configured as a primary cell and a secondary DCI format size in case that a TDD cell is configured as a primary cell, and vice versa for DCI received from a TDD secondary cell. A first bit field size for an HARQ process number is assumed for the first DCI format size, and a second bit field size for an HARQ process number is assumed for the second DCI format size.

In addition, the scheduling unit 1015 decides the transmission processing and the reception processing timing based on the uplink reference configuration, the downlink reference configuration and/or the transmission direction configuration.

The CSI report management unit 1017 in the higher layer processing unit 101 identifies the CSI reference REs. The CSI report management unit 1017 requests channel estimation unit 1059 to derive the channel's CQI (Channel Quality Information) from the CSI references REs. The CSI report management unit 1017 outputs the CQI to the transmission unit 107. The CSI report management unit 1017 sets the configuration of the channel estimation unit 1059.

Control unit 103 generates control signals addressed to reception unit 105 and transmission unit 107 based on the control information received from higher layer processing unit 101. Control unit 103 controls the operation of reception unit 105 and transmission unit 107 through the generated control signals . Control unit 103 indicates to the decoding unit 1051, for DCI received from an FDD secondary cell, a first DCI format size in a case that an FDD cell is configured as a primary cell and a secondary DCI format size in case that a TDD cell is configured as a primary cell, and vice versa for DCI received from a TDD secondary cell. A first bit field size for an HARQ process number is assumed for the first DCI format size, and a second bit field size for an HARQ process number is assumed for the second DCI format size.

Reception unit 105, according to the control information received from control unit 103, receives information from the base station device 1 via the antenna unit 109 and performs demultiplexing, demodulation and decoding to it. Reception unit 105 outputs the result of these operations to higher layer processing unit 101.

The radio reception unit 1057 down-converts the downlink information received from the base station device 1 via the antenna unit 109, eliminates the unnecessary frequency components, performs amplification to bring the signal to an adequate level, and based on the in-phase and quadrature components of the received signal transforms the received analog signal into a digital signal. The radio reception unit 1057 trims the guard interval (GI) from the digital signal and performs FFT (Fast Fourier Transform) to extract the frequency domain signal.

The demultiplexing unit 1055 demultiplexes the PHICH, the PDCCH, the ePDCCH, the PDSCH, and the downlink reference signals from the extracted frequency domain signal. In addition, the demultiplexing unit 1055 performs channel compensation to the PHICH, PDCCH, ePDCCH, and PDSCH, based on the channel estimation values received from the channel estimation unit 1059. The demultiplexing unit 1055 outputs the demultiplexed downlink reference signals to the channel estimation unit 1059.

The demodulation unit 1053 performs multiplication by the code corresponding to the PHICH, performs BPSK (Binary Phase Shift Keying) demodulation to the resulting signal, and outputs the result to the decoding unit 1051. The decoding unit 1051 decodes the PHICH addressed to the mobile station device 2 and transmits the decoded HARQ indicator to the higher layer processing unit 101. The demodulation unit 1053 performs QPSK (Quadrature Phase Shift Keying) demodulation to the PDCCH and/or ePDCCH and outputs the result to the decoding unit 1051. The decoding unit 1051 attempts to decode the PDCCH and/or the ePDCCH. If the decoding operation is successful, the decoding unit 1051 transmits the downlink control information and the corresponding RNTI to the higher layer processing unit 101. The decoding unit 1051 assumes, for DCI received from an FDD secondary cell, a first DCI format size in a case that an FDD cell is configured as a primary cell and a secondary DCI format size in case that a TDD cell is configured as a primary cell, and vice versa for DCI received from a TDD secondary cell. A first bit field size for an HARQ process number is assumed for the first DCI format size, and a second bit field size for an HARQ process number is assumed for the second DCI format size.

The demodulation unit 1053 demodulates the PDSCH addressed to mobile station device 2 as indicated by the downlink control grant indication (QPSK, 16QAM (Quadrature Amplitude Modulation), 64QAM, or other), and outputs the result to the decoding unit 1051. The decoding unit 1051 performs decoding as indicated by the downlink control grant indication and outputs the decoded downlink data (transport block) to the higher layer processing unit 101.

The channel estimation unit 1059 estimates the pathloss and the channel conditions from the downlink reference signals received from the demultiplexing unit 1055 and outputs the estimated pathloss and channel conditions to the higher layer processing unit 101. In addition, the channel estimation unit 1059 outputs the channel values estimated from the downlink reference signals to the demultiplexing unit 1055. In order to compute the CQI, the channel estimation unit 1059 performs measurements to the channel and/or interference.

The transmission unit 107, according to the control information received from control unit 103, generates the uplink reference signals, performs coding and modulation to the uplink data received from the higher layer processing unit (transport block), multiplexes the PUCCH, the PUSCH and the generated uplink reference signals, and transmits it to the base station 1 through the antenna unit 109.

The coding unit 1071 performs block coding, convolutional coding, or others, to the uplink control information received from the higher layer processing unit 101. In addition, the coding unit 1071 performs turbo coding to the scheduled PUSCH data.

The modulation unit 1073 performs modulation (BPSK, QPSK, 16QAM, 64QAM, or other) to the coded bitstream received from coding unit 1071 according to the downlink control indication received from base station device 1 or to a pre-defined modulation convention for each channel.
Modulation unit 1073 decides the number of PUSCH streams to transmit through spatial multiplexing, maps the uplink data to that number of different streams, and performs MIMO SM (Multiple Input Multiple Output Spatial Multiplexing) precoding to those streams.

Uplink reference signal generation unit 1079 generates a bit stream following a series of pre-defined rules in accordance to the PCI (Physical Cell Identity, or Cell ID) for the base station device 1 to be able to discern the signals sent from the mobile station device 2, the value of the bandwidth in which to place the uplink reference signals, the cyclic shift indicated in the uplink grant, and the value of the parameters related to the DMRS sequence generation. The multiplexing unit 1075 arranges the PUSCH modulated symbols in different streams and performs DFT (Discrete Fourier Transform) to them according to the indications given by control unit 103. In addition, the multiplexing unit 1075 multiplexes the PUCCH, the PUSCH, and the generated reference signals in their corresponding REs in their appropriate antenna ports.

Radio transmission unit 1077 performs IFFT (Inverse Fast Fourier Transform) to the multiplexed signals, performs SC-FDMA modulation (Single Carrier Frequency Division Multiple Access) to them, adds the GI to the resulting streams, generates the digital baseband signal, transforms the digital baseband signal into an analog baseband signal, generates the in-phase and quadrature components of the analog signal and up-converts it, removes the unnecessary frequency components, performs power amplification, and outputs the resulting signal to antenna unit 109.

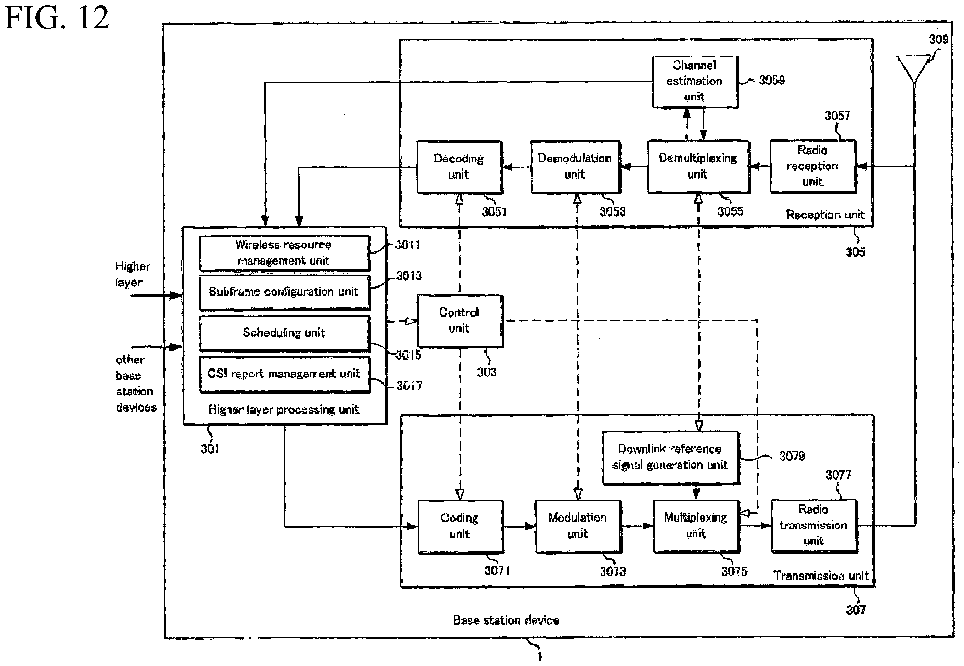

FIG. 12 illustrates the block diagram of a base station device that corresponds with the base station device 1. As shown in the figure, the mobile station device includes a higher layer processing unit 301, a control unit 303, a reception unit 305, a transmission unit 307, and an antenna unit 309. The higher layer processing unit 301 giving support to one or more cells present in the base station device, and includes a wireless resource management unit 3011, a subframe configuration unit 3013, a scheduling unit 3015, and a CSI report management unit 3017. The reception unit 305 includes a decoding unit 3051, a demodulation unit 3053, a demultiplexing unit 3055, a radio reception unit 3057, and a channel estimation unit 3059. The transmission unit 307 includes a coding unit 3071, a modulation unit 3073, a multiplexing unit 3075, a radio transmission unit 3077, and a downlink reference signal creation generation 3079.

The higher layer processing unit 301 generates control signal to control the operation of the reception unit 305 and the transmission unit 307 and outputs them to control unit 303. In addition, the upper layer processing unit 301 processes the operations related to the MAC layer (Medium Access Control), the PDCP layer (Packet Data Convergence Protocol), the RLC layer (Radio Link Control), and the RRC layer (Radio Resource Control).

The wireless resource management unit 3011 in the higher layer processing unit 301 generates the downlink data to transmit in the downlink PDSCH (transport block), the system information, the RRC messages, and the MAC CE (Control Element) and outputs it to the transmission unit 307. Alternatively, this information can be obtained from a higher layer. In addition, the wireless resource management unit 3011 manages the configuration information of each mobile station device.

The subframe configuration unit 3013 in the higher layer processing unit 301 manages the uplink reference signal configuration, the downlink reference signal configuration, and the transmission direction configuration of each mobile station device.

The subframe configuration unit 3013 generates a first parameter "uplink reference signal configuration", a second parameter "downlink reference signal configuration", and a third parameter "transmission direction configuration". The subframe configuration unit 3013 transmits the three parameters to the mobile station device 2 via the transmission unit 307.

The base station device 1 may decide the uplink reference signal configuration, the downlink reference signal configuration, and/or the transmission direction configuration. Alternatively, either of these parameters may be configured by a higher layer.

For example, the subframe configuration unit 3013 may decide the uplink reference signal configuration, the downlink reference signal configuration, and/or the transmission direction configuration based on the traffic conditions of the uplink or the downlink.

The subframe configuration unit 3013 manages sets of at least two subframes. The subframe configuration unit 3013 may manage a set of at least 2 subframes for each mobile station device. The subframe configuration unit 3013 may manage a set of at least two subframes for each serving cell.
The subframe configuration unit 3013 may manage a set of at least two subframes for each CSI process.

The subframe configuration unit 3013 transmits the configuration information corresponding to a set of at least two subframes to the mobile station device 2 through the transmission unit 307.

The scheduling unit 3015 in the higher layer processing unit 301 decides the frequency and subframe allocation of the physical channels (PDSCH and PUSCH), and their appropriate coding rate, modulation and transmission power according to the channel condition report received from the mobile station 2 and the channel estimation and channel quality parameters received from channel estimation unit 3059. The scheduling unit 3015 decides if the flexible subframes are used for downlink physical channel and/or downlink physical signal scheduling or for uplink physical channel and/or uplink physical signal scheduling. The scheduling unit 3015 generates control signals (for example, with the DCI format (Downlink Control Information)) to control the reception unit 305 and the transmission unit 307 based on the resulting scheduling and outputs them to the control unit 303. The scheduling unit 3015 generates control signals related to an FDD secondary cell with a first DCI format size in a case that an FDD cell is configured as a primary cell and with a secondary DCI format size in case that a TDD cell is configured as a primary cell, and vice versa for control signals related to a TDD secondary cell. A first bit field size for an HARQ process number is assumed for the first DCI format size, and a second bit field size for an HARQ process number is assumed for the second DCI format size.

The scheduling unit 3015 generates the report that carries the scheduling information for the physical channels (PDSCH and PUSCH) based on the resulting scheduling.
Furthermore, the scheduling unit 3015 decides the reception and transmission timing based on the uplink reference signal configuration, the downlink reference signal configuration, and/or the transmission direction configuration.

The CSI report management unit 3017 in the higher layer processing 301 controls the CSI report of the mobile station device 2. The CSI report management unit 3017 transmits to the mobile station device 2 the configuration information for deriving the CQI from the CSI reference signal REs via the antenna unit 309.

Control unit 303 generates the control signals to manage the reception unit 305 and the transmission unit 307 according to the control signals received from the higher layer processing unit 301. Control unit 303 outputs these signals to the reception unit 305 and the transmission unit 307 and controls their operation. Control unit 303 indicates to the coding unit 3071 Control unit 103 indicates to the coding unit 3071 to generate control signals related to an FDD secondary cell with a first DCI format size in a case that an FDD cell is configured as a primary cell and with a secondary DCI format size in case that a TDD cell is configured as a primary cell, and vice versa for control signals related to a TDD secondary cell. A first bit field size for an HARQ process number is assumed for the first DCI format size, and a second bit field size for an HARQ process number is assumed for the second DCI format size.

Reception unit 305, according to the control information received from control unit 303, receives information from the mobile station device 2 via the antenna unit 309 and performs demultiplexing, demodulation and decoding to it. Reception unit 305 outputs the result of these operations to higher layer processing unit 3101.

The radio reception unit 3057 down-converts the downlink information received from the mobile station device 2 via the antenna unit 309, eliminates the unnecessary frequency components, performs amplification to bring the signal to an adequate level, and based on the in-phase and quadrature components of the received signal transforms the received analog signal into a digital signal. The radio reception unit 3057 trims the guard interval (GI) from the digital signal and performs FFT (Fast Fourier Transform) to extract the frequency domain signal.

The demultiplexing unit 3055 demultiplexes the PUCCH, the PUSCH and the reference signals of the received signal from the radio reception unit 3057. This demultiplexing is performed according to the uplink grant and the wireless resource allocation information sent to the mobile station 2.
In addition, the demultiplexing unit 3055 performs channel compensation of the PUCCH and the PUSCH according to the channel estimation values received from the channel estimation unit 3059. In addition, the demultiplexing unit 3055 gives the demultiplexed uplink reference signal to the channel estimation unit 3059.

The demodulation unit 3053 performs IDFT (Inverse Discrete Fourier Transform) to the PUSCH, obtains the modulated symbols, and performs demodulation (BPSK, QPSK, 16QAM, 64QAM, or other) for each PUCCH and PUSCH symbol according to the modulation configuration transmitted to the mobile station 2 in the uplink grant notification or according to another pre-defined configuration. The demodulation unit 3053 separates the symbols received in the PUSCH according to the MIMO SM precoding configuration transmitted to the mobile station 2 in the uplink grant notification or according to another pre-defined configuration.

The decoding unit 3051 decodes the received uplink data in the PUSCCH and the PUSCH according to the coding rate configuration transmitted to the mobile station 2 in the uplink grant notification or according to another predefined configuration, and outputs the resulting stream to the higher layer processing unit 301. In the case of retransmitted PUSCH the decoding unit 3051 decodes the received demodulated bits using the coded bits that are held in the HARQ buffer in the higher processing unit 301. The channel estimation unit 3059 estimates the channel conditions and the channel quality using the uplink reference signal received from the demultiplexing unit 3055, and outputs this information to the demultiplexing unit 3055 and the higher layer process unit 301.

The transmission unit 307, according to the control information received from control unit 303, generates the downlink reference signal, prepares the downlink control information including the HARQ indicator received from the higher layer processing unit 301, performs coding and modulation of the downlink data, multiplexes the result with the PHICH, the PDCCH, the ePDCCH, the PDSCH and the downlink reference signal, and transmit the resulting signal to the mobile station device 2 via the antenna unit 309.

The coding unit 3071 performs block coding, convolutional coding, turbo coding, or other, to the HARQ indicator received from the higher layer processing 301, the downlink control information and the downlink data, according to the coding configuration decided by the wireless resource management unit 3011 or according to another pre-defined configuration. The coding unit 3071 generates control signals related to an FDD secondary cell with a first DCI format size in a case that an FDD cell is configured as a primary cell and with a secondary DCI format size in case that a TDD cell is configured as a primary cell, and vice versa for control signals related to a TDD secondary cell. A first bit field size for an HARQ process number is assumed for the first DCI format size, and a second bit field size for an HARQ process number is assumed for the second DCI format size.
The modulation unit 3073 performs modulation (BPSK, QPSK, 16QAM, 64QAM, or other) to the coded bitstream received from coding unit 3071 according to the modulation configuration decided by the wireless resource management unit 3011 or according to another pre-defined configuration.

The downlink reference signal generation unit 3079 generates downlink reference signals well known by the mobile station device 2 according to some pre-defined rules and employing the PCI (Physical Cell Identity) value, which allows the mobile station device 2 to discern the transmission of the base station device 1. The multiplexing unit 3075 multiplexes the modulated symbols in each channel and the generated downlink reference signals in their corresponding REs in their appropriate antenna port.

The radio transmission unit 3077 performs IFFT (Inverse Fast Fourier Transform) to the multiplexed symbols, OFDM modulation, adds the guard interval to the OFDM symbols, generates the digital baseband signal, transforms the digital baseband signal into an analog baseband signal, generates the in-phase and quadrature components of the analog signal and up-converts it, removes the unnecessary frequency components, performs power amplification, and outputs the resulting signal to antenna unit 309.

The number of available resources for transmission of control or information data depends on the reference signals present in each resource block. The base station device is configured to avoid the transmission of data in these REs by a proper resource element mapping.

The mobile station device assumes the resource element mapping that is used at any given time to retrieve the data.
The data is mapped in sequence to REs on the associated antenna port which fulfill that they are part of the EREGs assigned for the EPDCCH transmission, they are assumed by the UE not to be used for CRS or for CSI-RS, and they are located in an OFDM symbol that is equal or higher than the starting OFDM symbol indicated by *l_{EPDCCHstart}.*

In the PDCCH region a CCE is defined to always have 4 available REs to transmit information. In order to do this the CCE configuration presents some variations depending on the number of CRS present or the reach of the PHICH. The result is that the PDCCH messages always have the same number of bits.

However, in the ePDCCH / PDSCH region the number of bits is variable. In order to be able to use all the available REs the base station mobile must accommodate the data to them. This is achieved by rate matching.

The rate matching operation generates a stream of bits of the required size by varying the code rate of the turbo code operation. The rate matching algorithm is capable of producing any arbitrary rate. The bitstreams from the turbo encoder undergo an interleave operation followed by bit collection to create a circular buffer. Bits are selected and pruned from the buffer to create a single bitstream with the desired code rate.

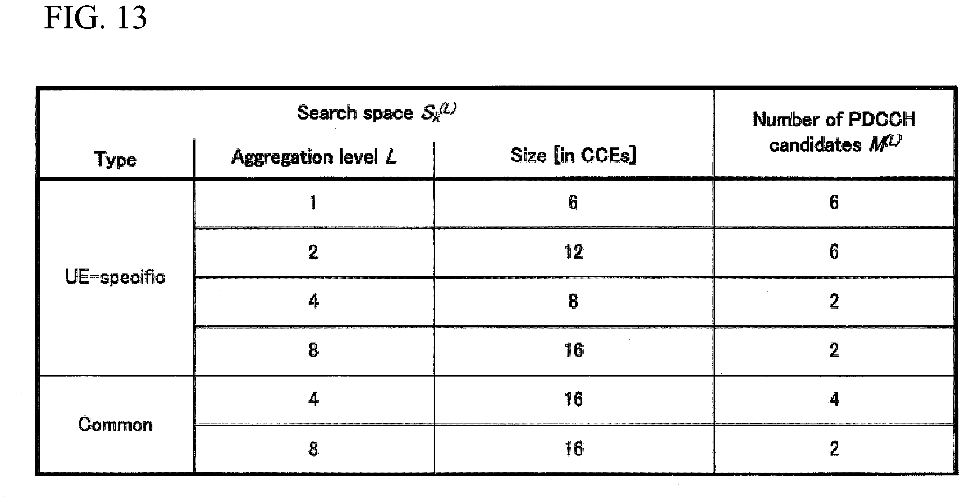

FIG. 13 contains the values that a mobile station device monitors for each aggregation level in the USS and the CSS. The aggregation level is the number of CCEs that a PDCCH uses. The mobile station device monitors a number of PDCCH candidates M^{(L)} for each aggregation level. For the common search space L can take one of two values, L = 4 or L = 8. The number of candidates the UE monitors is M^{(L)} = 4 for L = 4 and M^{(L)} = 2 for L = 8. The size of the search space of each of the cases is 16 CCEs.

The basic unit of the Enhanced PDCCH (ePDCCH) is the Enhanced Resource Element Group (EREG). The REs of a PRB pair are cyclically numbered from 0 to 15 in ascending order of frequency and OFDM symbol skipping the REs that may contain DMRS (DeModulation Reference Signals) . The same transmission processing that is applied to the PDSCH is applied to the DMRS, which allows the UE to obtain the information it needs to be able to demodulate the data. EREGᵢ is composed of all the REs with number 'i', where i = 0, 1, ... 15.

However, the number of REs that can be used is not fixed. The REs used for PDCCH, CRS and CSI-RS (Channel State Information Reference Signal) cannot be used for ePDCCH. The CSI-RS are transmitted periodically to enable the UE to measure the channel conditions of up to 8 antennas, and it is not defined for special subframe configurations.

The control information is transmitted in Enhanced CCEs (ECCEs), which are composed of 4 or 8 EREGs, depending on the number of REs that are available for transmission in each ECCE for a given configuration.

There can be 1 or 2 sets of ePDCCH-sets simultaneously, each one independently configurable and spanning 1, 2, 4 or 8 PRB pairs. The ePDCCH is sent in the antenna ports 107-110, along with the DM-RS.

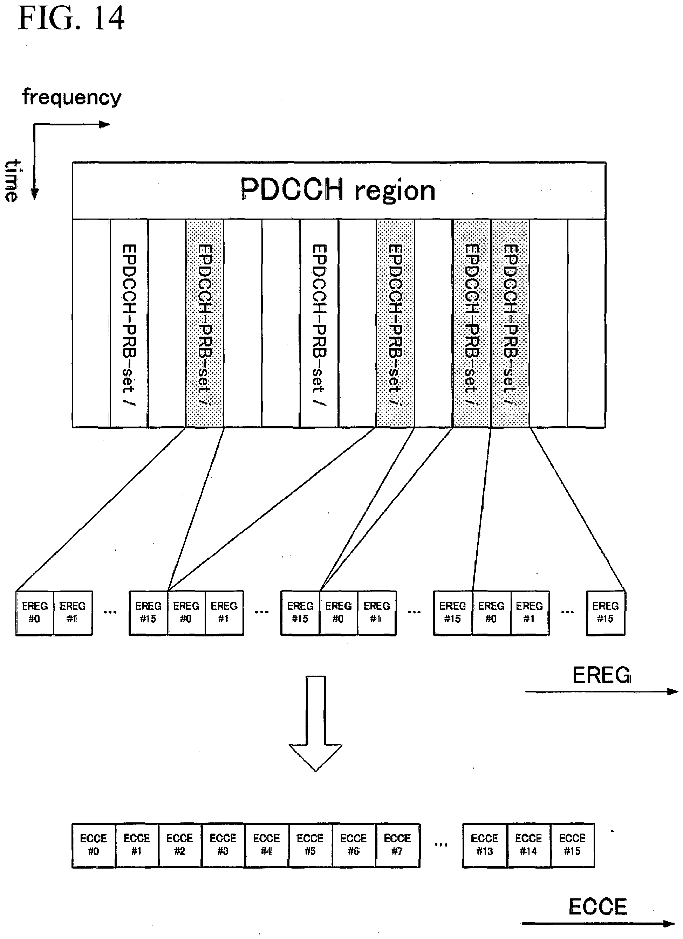

FIG. 14 illustrates the mapping of the ECCEs of the ePDCCH in the PRB-pairs of ePDCCH-set i (where i is either 0 or 1, and *l* is also either 0 or 1 while fulfilling *l* ≠ i).
Each PRB-pair is composed of 16 EREGs. The EREGs of all the PRB-pairs together can be considered as the EREGs of the ePDCCH-set. A PRB pair comprises 16 EREGs, which can compose 4 or 2 ECCEs. In the example of the figure one ECCE is assumed to be composed of 4 EREGs.

In a localized allocation, each ECCE of the ePDCCH is composed of EREGs belonging to a single a PRB pair. Due to all the REGs being in a relatively narrow band, higher benefits can be obtained through precoding and scheduling.

In a distributed allocation, each ECCE of the ePDCCH is composed of EREGs belonging to different PRB pairs. Due to the frequency hopping performed to the REGs, the robustness is increased through frequency diversity.

In consideration to localized or distributed allocation of the control information, ePDCCH set 0 does not condition ePDCCH set 1 (if present). ePDCCH set 0 and ePDCCH set 1 are defined for any combination of localized and / or distributed transmission mapping.

UE-specific search space is defined for ePDCCH as ePDCCH USS (also referred to as eUSS) . The search space of each ePDCCH-PRB-set is independently configured.

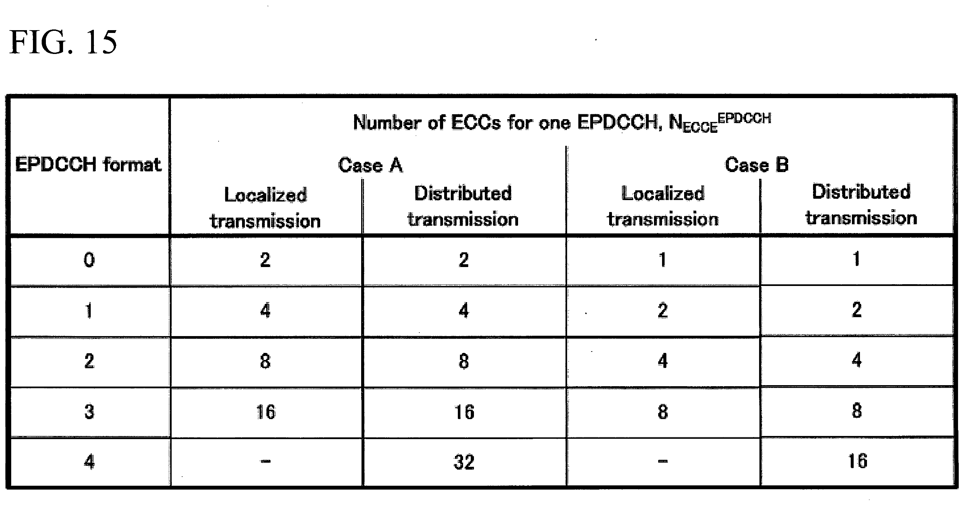

FIG. 15 contains the number of ECCEs that constitute an ePDCCH for each ePDCCH format. Case A applies for normal subframes and normal downlink CP when DCI formats 2/2A/2B/2C/2D are monitored and the number of available downlink resource blocks of the serving cell is 25 or more; or for special subframes with special subframe configuration 3, 4, 8 and normal downlink CP when DCI formats 2/2A/2B/2C/2D are monitored and the number of available downlink resource blocks of the serving cell is 25 or more; or for normal subframes and normal downlink CP when DCI formats 1A/1B/1D/1/2/2A/2B/2C/2D/0/4 are monitored, and when *n*_{EPDCCH} < 104; or for special subframes with special subframe configuration 3, 4, 8 and normal downlink CP when DCI formats 1A/1B/1D/1/2A/2/2B/2C/2D/0/4 are monitored, and when *n*_{EPDCCH} < 104. Otherwise, case B is used.

The quantity *n*_{EPDCCH} (the number of REG available in an ECCE) for a particular mobile station device and referenced above is defined as the number of downlink REs in a PRB-pair configured for possible EPDCCH transmission of a EPDCCH-set fulfilling that they are part of any one of the 16 EREGs in the PRB-pair, they are assumed by the UE not to be used for CRS or for CSI-RS, and they are located in an OFDM symbol *l* equal or higher than the starting OFDM symbol (*l ≥ l*_{EPDCCHStart}).

The format of the DCI depends on the purpose the ePDCCH is transmitted for. Format 0 is usually transmitted for uplink scheduling and uplink power control. Format 1 is usually transmitted for downlink SIMO (Single Input Multiple Output) scheduling and uplink power control. Format 2 is usually transmitted for downlink MIMO scheduling and uplink power control. Format 3 is usually transmitted for uplinkpower control. Format 4 is usually transmitted for uplink scheduling of up to four layers.

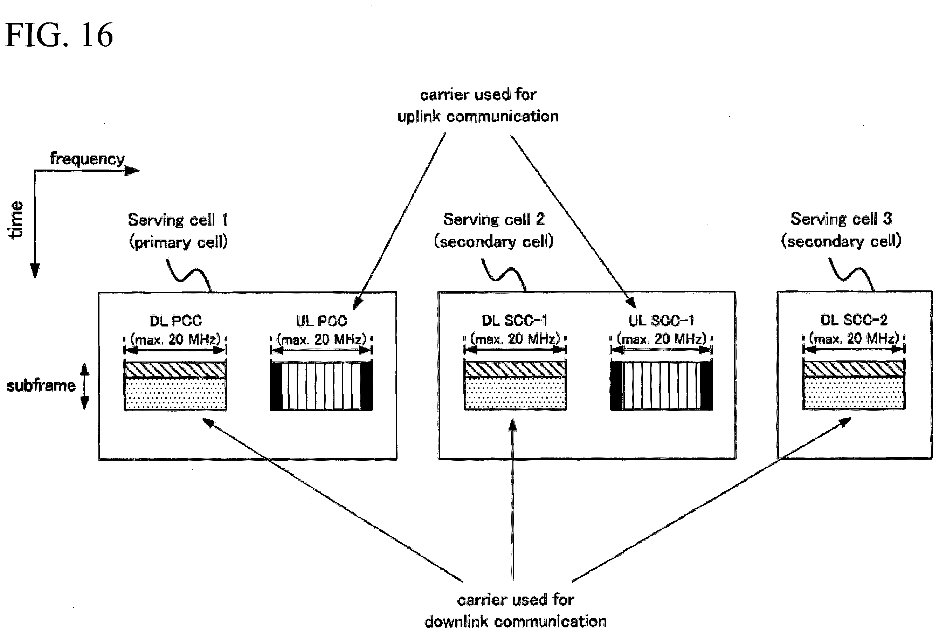

FIG. 16 is a diagram illustrating an example of cell aggregation (carrier aggregation) processing according to the present invention. In the figure, the horizontal axis represents the frequency domain and the vertical axis represents the time domain. In the illustrated cell aggregation processing illustrated, three serving cells (serving cell 1, serving cell 2, and serving cell 3) are aggregated. One of the plurality of aggregated serving cells is a primary cell (PCell) . The primary cell is a serving cell having functions equivalent to those of a cell in LTE.

The serving cells other than the primary cell are secondary cells (SCells). The secondary cells have functions which are more limited than the primary cell, and are mainly used to transmit and receive the PDSCH and/or PUSCH. For example, the mobile station device 2 performs random access using only the primary cell. Also, the mobile station device 2 may not necessarily receive paging and system information transmitted on the PBCH and PDSCH of the secondary cells.

The carriers corresponding to serving cells in the downlink are downlink component carriers (DL CCs), and the carriers corresponding to serving cells in the uplink are uplink component carriers (UL CCs). The carrier corresponding to the primary cell in the downlink is a downlink primary component carrier (DL PCC), and the carrier corresponding to the primary cell in the uplink is an uplink primary component carrier (UL PCC). The carriers corresponding to the secondary cells in the downlink are downlink secondary component carriers (DL SCCs), and the carriers corresponding to the secondary cells in the uplink are uplink secondary component carriers (UL SCCs).

The base station device 1 necessarily sets both the DL PCC and the UL PCC as a primary cell. Also, the base station device 1 is capable of setting only the DL SCC or both the DL SCC and the UL SCC as a secondary cell. Further, the frequency or carrier frequency of a serving cell is called a serving frequency or serving carrier frequency, the frequency or carrier frequency of a primary cell is called a primary frequency or primary carrier frequency, and the frequency or carrier frequency of a secondary cell is called a secondary frequency or secondary carrier frequency.

The mobile station device 2 and the base station device 1 first start communication using one serving cell. Through this communication, the base station device 1 sets a set of one primary cell and one or a plurality of secondary cells for the mobile station device 2 by using an RRC signal (radio resource control signal). The base station device 1 is capable of setting a cell index for a secondary cell. The cell index of the primary cell is constantly zero. The cell index of the same cell may be different among the mobile station devices 1. The base station device 1 is capable of instructing the mobile station device 2 to change the primary cell using handover.

The serving cell 1 is the primary cell, and the serving cell 2 and the serving cell 3 are the secondary cells. Both the DL PCC and UL PCC are set in the serving cell 1 (primary cell), both the DL SCC-1 and UL SCC-1 are set in the serving cell 2 (secondary cell), and only the DL SCC-2 is set in the serving cell 3 (secondary cell) .

The channels used in the DL CCs and UL CCs have the same channel structure as that in LTE. Each of the DL CCs has a region to which the PHICH, the PCFICH, and the PDCCH are mapped, which is represented by a region hatched with oblique lines, and a region to which the PDSCH is mapped, which is represented by a region hatched with dots. The PHICH, the PCFICH, and the PDCCH are frequency-multiplexed and/or time-multiplexed. The region where the PHICH, the PCFICH, and the PDCCH are frequency-multiplexed and/or time-multiplexed and the region to which the PDSCH is mapped are time-multiplexed. In each of the UL CCs, the region to which the PUCCH represented by a gray region is mapped, and the region to which the PUSCH represented by a region hatched with horizontal lines is mapped are frequency-multiplexed.

In cell aggregation, up to one PDSCH can be transmitted in each of the serving cells (DL CC), and up to one PUSCH can be transmitted in each of the serving cells (UL CC). In the example of the figure, up to three PDSCHs can be simultaneously transmitted using three DL CCs, and up to two PUSCHs can be simultaneously transmitted using two UL CCs.

Furthermore, in cell aggregation, a downlink assignment including information indicating the allocation of radio resources for the PDSCH in the primary cell, and an uplink grant including information indicating the allocation of radio resources for the PUSCH in the primary cell, are transmitted on the PDCCHs of the primary cell. The serving cell in whose PDCCH a downlink assignment including information indicating the allocation of radio resources for the PDSCH in the secondary cell and an uplink grant including information indicating the allocation of radio resources for the PUSCH in the secondary cell are transmitted is set by the base station device 1. This setting may vary among mobile station devices.

If a setting is made so that a downlink assignment including information indicating the allocation of radio resources for the PDSCH and an uplink grant including information indicating the allocation of radio resources for the PUSCH in a certain secondary cell are to be transmitted using a different serving cell (hereafter cross-carrier scheduling, as opposed to self-scheduling), the mobile station device 2 does not decode the PDCCH in this secondary cell. For example, if a setting is made so that a downlink assignment including information indicating the allocation of radio resources for the PDSCH and an uplink grant including information indicating the allocation of radio resources for the PUSCH in the serving cell 2 are to be transmitted using the serving cell 1 (cross-carrier scheduling), and that a downlink assignment including information indicating the allocation of radio resources for the PDSCH and an uplink grant including information indicating the allocation of radio resources for the PUSCH in the serving cell 3 are to be transmitted using the serving cell 3 (self-scheduling), the mobile station device 2 decodes the PDCCH in the serving cell 1 and the serving cell 3, and does not decode the PDCCH in the serving cell 2.

The base station device 1 sets, for each serving cell, whether or not a downlink assignment and an uplink grant include a carrier indicator, which indicates the serving cell whose PDSCH or PUSCH radio resources are allocated by the downlink assignment and the uplink grant. The PHICH is transmitted in the serving cell in which the uplink grant including the information indicating the allocation of radio resources for the PUSCH for which the PHICH indicates an ACK/NACK has been transmitted.

The base station device 1 is capable of deactivating and activating a secondary cell which has been set for the mobile station device 2 using MAC (Medium Access Control) CE (Control Element). The mobile station device 2 does not receive any physical downlink channels and signals and does not transmit any physical uplink channels and signals in a deactivated cell, and does not monitor downlink control information for the deactivated cell. The mobile station device 2 regards a secondary cell which is newly added by the base station device 1 as a deactivated cell. Note that the primary cell is not deactivated.

In an FDD (Frequency Division Duplex) wireless communication system, a DL CC and a UL CC corresponding to a single serving cell are constructed at different frequencies. In a TDD (Time Division Duplex) wireless communication system, a DL CC and a UL CC corresponding to a single serving cell are constructed at the same frequency, and an uplink subframe and a downlink subframe are time-multiplexed at a serving frequency.

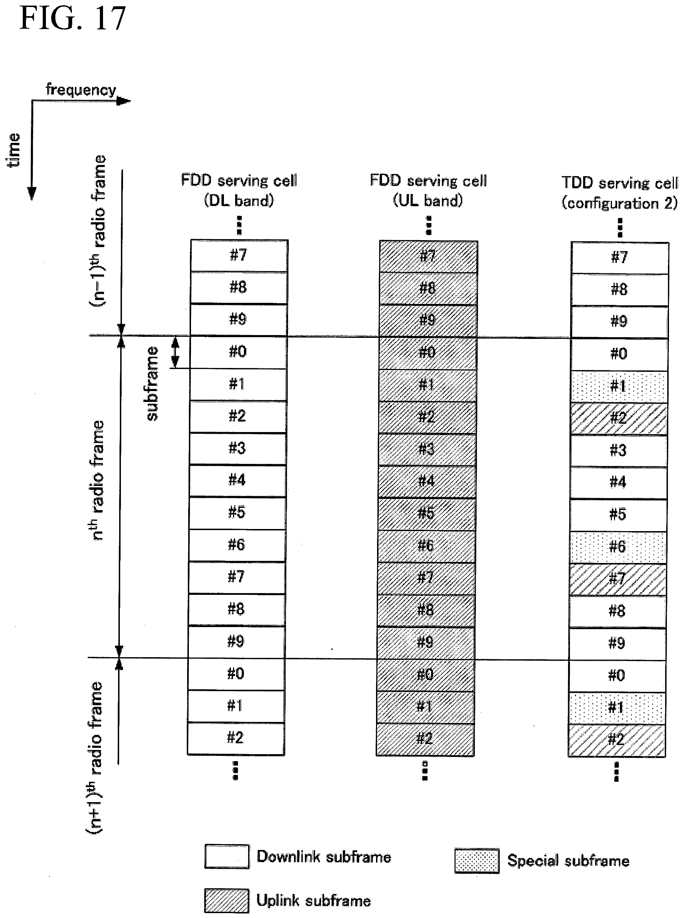

FIG. 17 is a diagram illustrating an example of the configuration of radio frames in a TDD-FDD CA (Carrier Aggregation) wireless communication system. This case is indistinctly referred to as TDD-FDD CA, or simply TDD-FDD in the document. The horizontal axis represents the frequency domain and the vertical axis represents the time domain.
White rectangles represent downlink subframes, rectangles hatched with oblique lines represent downlink subframes, and rectangles hatched with dots represent special subframes.
The number (#i) assigned to each subframe is the number of the subframe in the radio frame.

In the figure, an FDD serving cell and a TDD serving cell are aggregated. The FDD serving cell has a band configured for downlink in which all the subframes are used for downlink transmission, and another band configured for uplink in which all the subframes are used for uplink transmission. The TDD serving cell has only one band, where the downlink subframes, uplink subframes, and special subframes are multiplexed in time. In the example of the figure the TDD serving cell uses the UL/DL configuration 2.

If the FDD serving cell is the PCell and the TDD serving cell is the SCell the PCell follows its own HARQ timing, while the SCell follows the timing of the PCell.
Instead of following the downlink set association described above, a mobile station device connected to a TDD SCell sends the HARQ indication of a message to the PCell through the FDD PUCCH following the FDD HARQ timing. As this channel is always available the mobile station device sends the HARQ indication in the subframe *n+4,* where *n* represents the subframe in which the reception of the related PDSCH took place, and a retransmission would occur in the subframe *n+8.*

The maximum number of simultaneous HARQ processes that can occur in a case in which a TDD serving cell is aggregated with an FDD serving cell depends on the configuration of the primary cell and the secondary cell.

Particularly, the case in which the TDD serving cell is the primary cell presents some challenges, because an FDD secondary cell adapts its HARQ timing to that of the TDD primary cell, therefore needing to address more HARQ processes than it is currently possible for FDD serving cells.

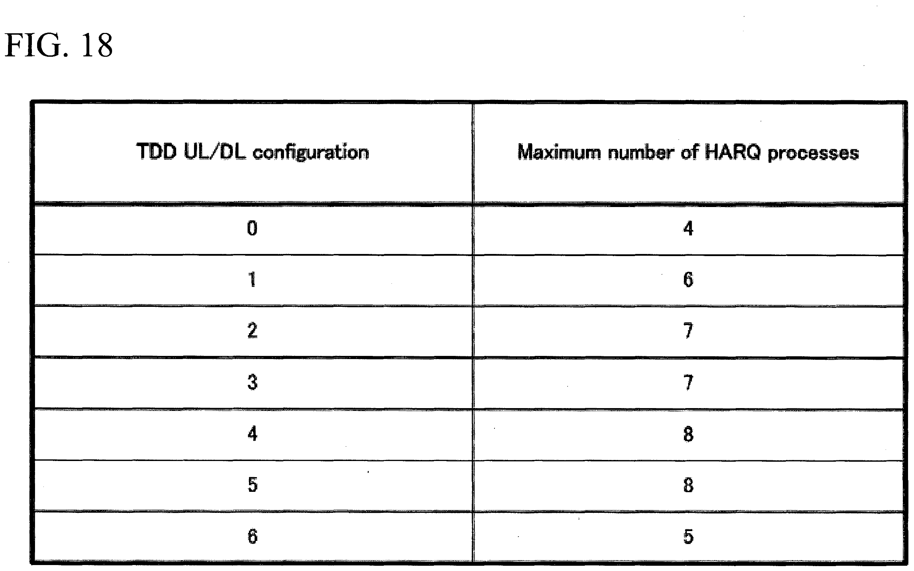

FIG. 18 shows a table with the number of HARQ processes that a TDD SCell base station device is expected to be able to handle simultaneously for each UL/DL Configuration when the PCell is FDD. This table is referred to as the new table for the TDD cell.

If a TDD serving cell is a PCell and an FDD serving cell is a SCell, the PCell follows the HARQ timing based on the legacy downlink association set, while the SCell follows the timing of the PCell. Instead of sending the HARQ indication in the subframe *n+4,* where *n* is the subframe in which the reception of the PDSCH took place, the HARQ indication is transmitted through the PCell PUCCH in one of the uplink subframes defined for the TDD PCell. In this case there is a conflict when the HARQ indication of the FDD SCell is expected to be transmitted in a subframe that is defined as downlink for the TDD PCell.

In an embodiment of the invention the FDD SCell downlink subframes that are affected by this issue are not scheduled for downlink transmission. Consequently, the number of HARQ processes that need to be handled simultaneously is 8 or less. For example, for a TDD PCell configured with UL/DL Configuration 1, the FDD SCell could only be scheduled for PDSCH transmission in subframes #3, #4, #8, and #9.

In another embodiment of the invention the FDD SCell is configured with the same HARQ timing defined for the TDD PCell, and transmits the HARQ indications according to the related downlink association set. The FDD SCell downlink subframes that coincide with a TDD PCell uplink subframes do not have an associated downlink set, and therefore are not scheduled for PDSCH. For example, for a TDD PCell configured with UL/DL Configuration 1, the FDD SCell could be scheduled for PDSCH transmission in the subframes that correspond with the TDD PCell downlink subframes, i.e. subframes #0, #1, #4, #5, #6, and #9.

The bit field size for the HARQ process number in the PDCCH/EPDCCH, and therefore the DCI format size, is different depending on the maximum number of DL HARQ processes. The maximum number of DL HARQ processes corresponding to a first bit field is a predetermined value based on the UL/DL configuration of the primary cell as shown in the legacy table, and the maximum number of HARQ processes corresponding to the second bit field is based on the UL/DL configuration of the primary cell as shown in the new table for the TDD cell.

In another embodiment of the invention the FDD SCell is configured with a separate UL/DL Configuration that allows the transmission of more HARQ indication messages in the subframes configured for uplink in the TDD PCell (DLreference configuration) . For example, for a TDD PCell configured with UL/DL Configuration 1, the FDD SCell could be configured separately with UL/DL Configuration 2, allowing for the subframes that correspond with downlink subframes under UL/DL Configuration 2 to be scheduled for PDSCH transmission, i. e. subframes #0, #1, #3, #4, #5, #6, #8, and #9.

The bit field size for the HARQ process number in the PDCCH/EPDCCH, and therefore the DCI format size, is different depending on the maximum number of DL HARQ processes. The maximum number of DL HARQ processes corresponding to a first bit field is a predetermined value based on the UL/DL configuration of the primary cell as shown in the legacy table, and the maximum number of HARQ processes corresponding to the second bit field is based on a DL reference configuration for the secondary cell as shown in the new table for the TDD cell.

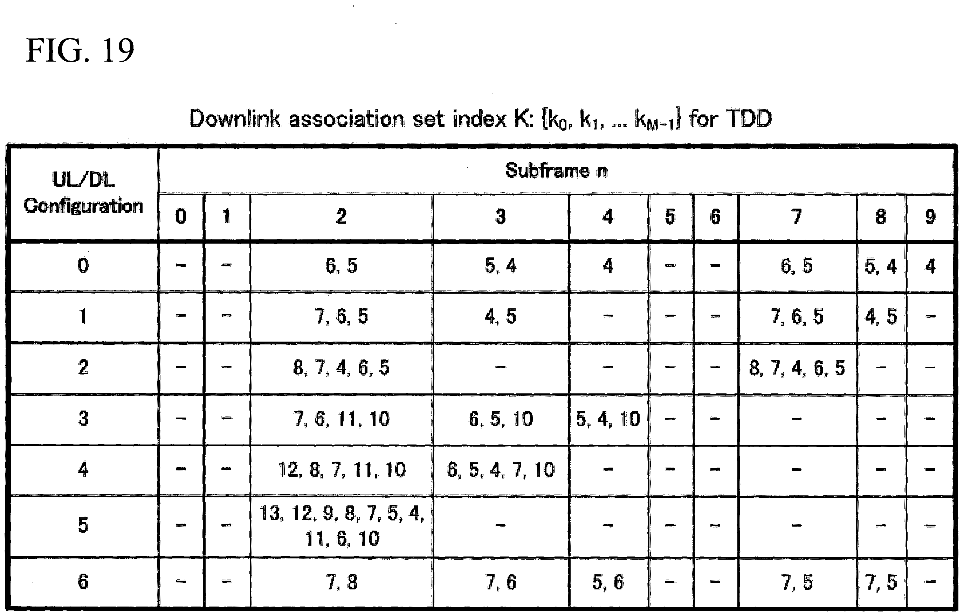

FIG. 19 shows an exemplary downlink association set allowing the HARQ indication message transmission of all the subframes in a radio frame. With the downlink associated set shown in the figure all the subframes can be scheduled for PDSCH transmission. This figure is referred to as the new downlink association set in the document.

In a system with a TDD PCell in which the downlink association set of the FDD SCell is set to allow the HARQ indication message transmission of all the downlink subframes of the FDD SCell, the number of HARQ processes that the base stations are required to handle exceeds the limitation of 8 HARQ processes that can be addressed by an FDD serving cell. The HARQ-ACK for a PDSCH transmission scheduled by a PDCCH/EPDCCH for an FDD secondary cell in a case that a TDD cell is a primary cell is transmitted with a DCI format size based on the new downlink association set.

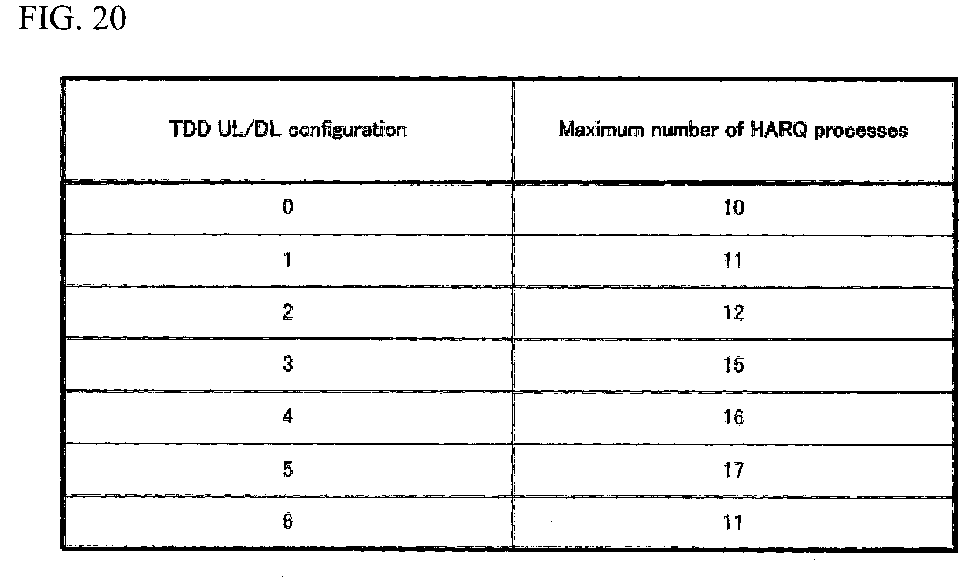

FIG. 20 shows a table with the number of HARQ processes that the base station devices are expected to be able to handle simultaneously for each UL/DL Configuration with the new downlink association set. At most a base station device needs to be able to handle 17 HARQ processes when the TDD PCell is configured with UL/DL configuration #5, and at least a base station device needs to be able to handle 10 HARQ processes when the TDD PCell is configured with UL/DL configuration #0. This table is referred to as the new table for the FDD cell.

If the mobile station device is configured with more than one serving cell and if at least two serving cells have different UL/DL configurations, *M_{DL_HARQ}* is the maximum number of DL HARQ processes as defined in the legacy table for the DL-reference UL/DL configuration of the serving cell; if the mobile station device is configured with more than one serving cell and if at least the primary cell is FDD while any of the secondary cells is TDD, *M_{DL_HARQ}* is the maximum number of DL HARQ processes as defined in the new table for the DL-reference UL/DL configuration of the secondary cell; if the mobile station device is configured with more than one serving cell and if at least the primary cell is TDD while any of the secondary cells is FDD, *M_{DL_HARQ}* is the maximum number of DL HARQ processes as defined in the new table for the DL-reference UL/DL configuration of the primary cell. Otherwise, *M_{DL_HARQ}* is the maximum number of DL HARQ processes.

An embodiment of the invention comprises a system in which the base station devices use a DCI format size with a bit field for the HARQ process number spanning 3 bits for an FDD SCell. The number of simultaneous processes that can be handled at any given time is 8, some restriction being applied to the possible transmissions to rule which of the downlink subframes are scheduled for PDSCH and which are left empty. The mobile station device may be aware of which subframes are being restricted or not. If the mobile station device is not aware of which subframes are restricted the mobile station device is expected to monitor the PDCCH and EPDCCH in all the subframes that could be used for downlink transmission.

In an embodiment of the invention the restriction follows a pseudo-random pattern based on the mobile station device's identifier and/or on the radio frame number to decide which subframes are chosen each time.

In another embodiment of the invention a fixed set of subframes that are restricted (and therefore not scheduled) is defined for each UL/DL Configuration. For instance, when the TDD PCell is configured with UL/DL Configuration 2, the subframes #0, #1, #5, and #6 are not configured for PDSCH scheduling.

In another embodiment of the invention a list is configured for each of the UL/DL Configurations with the order in which the subframes should be not scheduled for PDSCH. In one example the criterion by which this list is crafted is the avoidance of subframes that have higher probability of being downlink subframes in nearby cells.
This criterion avoids the problem in which a mobile station device connected to a serving cell and in the proximity of a different serving cell receives the downlink transmission of the latter serving cell as high interference. According to this criterion an example priority order of the subframes to use is subframe #5, #0, #6, #1, #9, #4, #8, #7, #3, and #2, meaning that subframe #2 would be the first one to be restricted, followed by subframe #3, subframe #7, etc.
Another example could be #5, #0, {#6, #1, #9}, #4, #8, #7, #3, and #2, where .{#6, #1, #9} means any of that group. A base station device may alternate between these subframes if needed, or decide their order depending on other factors.

In another embodiment of the invention the base station device communicates with nearby base station devices to know about their UL/DL Configuration and restricts the subframes that are most likely to result in collisions.

The scheduling of PDSCH can be done by the base station device through the use of DCI format 1/1A/1B/1D/2/2A/2B/2C/2D. These DCI formats have a field for the HARQ process number which spans 3 bits for FDD and 4 bits for TDD. This limits the number of HARQ processes that can be handled simultaneously by the base station device to 8 in the case of FDD and 16 in the case of TDD. The difference between the FDD case and the TDD case is not limited to the size of the HARQ process number field; other fields may also vary or be only present for one of the cases.

An embodiment of the invention uses the abovementioned DCI formats and restricts the transmission of HARQ processes in excess of the HARQ processes that can be signaled by the HARQ process number field. An FDD SCell under a TDD PCell is limited to 8 simultaneous HARQ processes, applying any of the restriction methods described above.

Another embodiment of the invention has the base station device using a 4 bit HARQ process number field to transmit control information to an FDD SCell that is aggregated with a TDD PCell. A terminal station device connected to an FDD serving cell that is aggregated with a TDD PCell is expected to monitor the PDCCH for DCI with the HARQ process number field size corresponding to TDD. The base station device can address all the possible HARQ processes that can occur simultaneously for the FDD SCell when the TDD PCell is under the UL/DL Configuration #0, #1, #2, #3, #4, and #6. The base station device applies any of the restriction rules described above to skip the scheduling of a PDSCH in one of the subframes for the FDD SCell when the TDD PCell is under the UL/DL Configuration #5.

In another embodiment of the invention the HARQ-ACK transmission is bundled to allow for all the HARQ-ACK to be transmitted without needing to reform the PUCCH even when the number of HARQ processes present exceeds the capacity of the PUCCH.

For DCI formats 1/1A/1B/1D/2/2A/2B/2C/2D on an FDD serving cell the HARQ process number spans 3 bits if the mobile station device is configured with one serving cell, or if the mobile station device is configured with more than one serving cell and the primary cell is FDD; the HARQ process number spans 4 bits if the mobile station device is configured with more than one serving cell and the primary cell is TDD. Additionally, the 2-bits field Downlink Assignment Index is present .in TDD for all the uplink-downlink configurations. If the UE is configured with one serving cell, or the UE is configured with more than one serving cell and the UL/DL configuration of all serving cells is same, then this field only applies to serving cell with UL/DL configuration 1-6; if the UE is configured with more than one serving cell and if at least two serving cells have different UL/DL configurations, then this field applies to a serving cell with DL-reference UL/DL configuration 1-6. This field is not present in FDD if the mobile station device is configured with one serving cell, or if the mobile station device is configured with more than one serving cell and the primary cell is FDD.

In a further embodiment of the invention the base station device uses a new DCI format to schedule PDSCH for an FDD SCell. When any of DCI formats 1/1A/1B/1D/2/2A/2B/2C/2D is monitored on an FDD serving cell, the HARQ process number spans 3 bits. When the DCI is monitored on an FDD cell the HARQ process-number spans 4 bits. The base station device applies any of the restriction rules described above to skip the scheduling of a PDSCH in one of the subframes for the FDD SCell when the TDD PCell is under UL/DL Configuration #5.

In a further embodiment of the invention has the mobile station device monitors any of DCI formats 1/1A/1B/1D/2/2A/2B/2C/2D, wherein if it is monitored on FDD cell and the primary cell is TDD with UL-DL configuration 1-4 or 6, the HARQ process number spans 4 bits; if it is monitored on an FDD cell and the primary cell is TDD with UL-DL configuration 5, the HARQ process number spans 5 bits.

In a further embodiment of the invention, when the mobile station device monitors DCI formats 1/1A/1B/1D/2/2A/2B/2C/2D on an FDD cell, the HARQ process number spans 3 bits; when the new DCI format is monitored on an FDD cell, the HARQ process number spans 4 bits if the mobile station device is configured with more than one serving cell and all serving cells are TDD, the HARQ process number spans 5 bits if the mobile station device is configured with more than one serving cell and the primary cell is TDD with at least one other serving cell being FDD.

In a further embodiment of the invention a new DCI format is associated with a new transmission mode including e.g. optimization for TDD-FDD CA operation.

In another embodiment of the invention the HARQ process numbering is independently treated for even and odd subframes. In this manner the base station device is capable of addressing 16 HARQ processes through the use of a 3 bits FDD HARQ process number field in DCI formats 1/1A/1B/1D/2/2A/2B/2C/2D. An HARQ process needing retransmission that is originally present in an even subframe would be retransmitted in another even subframe. An HARQ process needing retransmission that is originally present in an odd subframe would be retransmitted in an odd subframe. The base station device applies any of the restriction rules described above to skip the scheduling of a PDSCH in one of the subframes for the FDD SCell when the TDD PCell is under the UL/DL Configuration #5.

The bit field size for the HARQ process number in the PDCCH/EPDCCH, and therefore the DCI format size, is different depending on the maximum number of DL HARQ processes. The maximum number of DL HARQ processes corresponding to a first bit field is a predetermined value based on the legacy downlink association set, and the maximum number of HARQ processes corresponding to the second bit field is based on the new downlink association set as shown in the new table for the FDD cell.

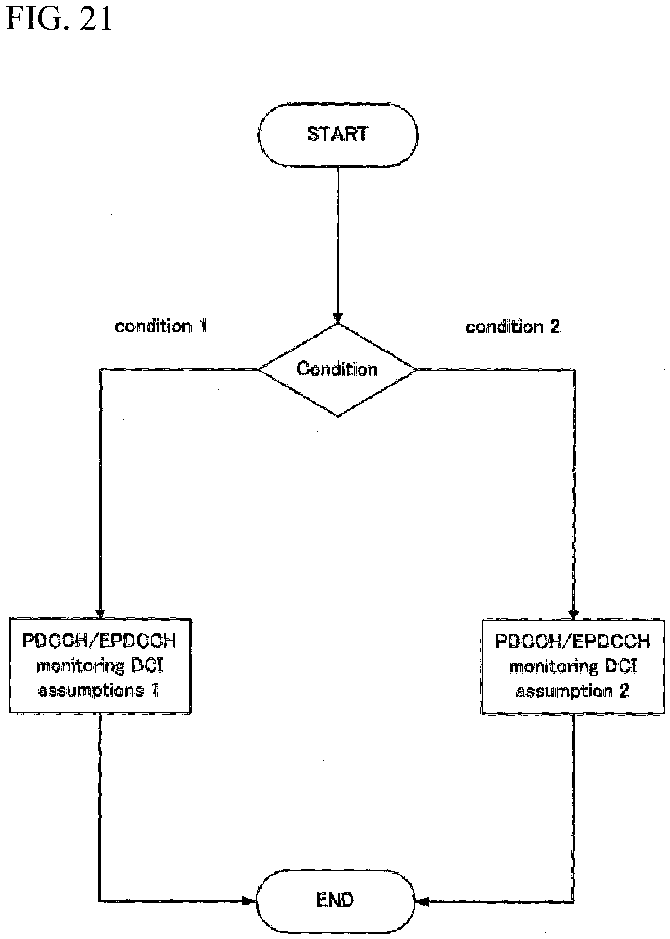

FIG. 21 illustrates a flow chart for the decision about the DCI assumptions for PDCCH/EPDCCH monitoring of the mobile station device.

The figure illustrates only two conditions, but in some cases there are three, four, or more different outcomes depending on a set of conditions. This figure is also used for those cases, understanding that an extension of it to accommodate the multiplicity of possible conditions is a trivial exercise. Alternatively, those cases can be thought as a series of binary conditions, in which condition 1 corresponds to a single condition and condition 2 corresponds to a bundle of all the remaining conditions together. If condition 2 is chosen, the process is repeated using one of the bundled conditions as the new condition 1, and the remaining ones as the new bundled condition 2. This process is iterated until a single condition is chosen.

The mobile station device checks the condition at a given rate, which can be, for example, every subframe, every radio frame, every time the mobile station device connects a new serving cell, every time a pre-defined event occurs, etc. The DCI monitoring assumptions 1, 2, ... shown in the flow chart can be different each time the condition is checked.

For a TDD SCell, if the PCell is a TDD serving cell and the scheduling of downlink transmission messages is performed through self-scheduling, a mobile station device assumes the HARQ processes to be defined by the legacy table, and monitors DCI expecting 4 bits for the HARQ process number.

For an FDD SCell, if the PCell is a TDD serving cell and the scheduling of downlink transmission messages is performed through self-scheduling, a mobile station device assumes the HARQ processes to be defined by the legacy table or by the new table, and monitors DCI expecting 4 bits for the HARQ process number.

Alternatively, the mobile station device monitors DCI expecting 4 bits for the HARQ process number unless the TDD PCell is configured with UL/DL Configuration #5, in which case the mobile station device monitors DCI expecting 5 bits for the HARQ process number.

Alternatively, the mobile station device monitors DCI expecting 5 bits for the HARQ process number.

For an FDD serving cell being scheduled by a TDD or an FDD serving cell, if the PCell is a TDD serving cell and the scheduling of downlink transmission messages is performed through cross-carrier scheduling, a mobile station device assumes the HARQ processes to be defined by a new table, and monitors DCI expecting 4 bits for the HARQ process number.

Alternatively, the mobile station device monitors DCI expecting 4 bits for the HARQ process number unless the TDD PCell is configured with UL/DL Configuration #5, in which case the mobile station device monitors DCI expecting 5 bits for the HARQ process number.

Alternatively, the mobile station device monitors DCI expecting 5 bits for the HARQ process number.

For a TDD serving cell being scheduled by a TDD or an FDD serving cell, if the PCell is a TDD serving cell and the scheduling of downlink transmission messages is performed through cross-carrier scheduling, a mobile station device assumes the HARQ processes to be defined by the legacy table, and monitors DCI expecting 4 bits for the HARQ process number.

For a TDD SCell if the PCell is an FDD serving cell and the scheduling of downlink transmission messages is performed through self-scheduling, a mobile station device assumes the HARQ processes to be defined according to the legacy timing, and monitors DCI expecting 3 bits for the HARQ process number.

Alternatively, the mobile station assumes the HARQ processes to be defined according to the legacy table, and monitors DCI expecting 4 bits for the HARQ process number.

Alternatively, the mobile station device monitors DCI assumes the HARQ processes to be defined by the legacy table, and the number of HARQ processes that the base station must be able to handle simultaneously is defined by a new table.

If the PCell is an FDD serving cell and the scheduling of downlink transmission messages is performed through self-scheduling, a mobile station device connected to an FDD SCell assumes the HARQ processes to be defined according .to the legacy timing, and monitors DCI expecting 3 bits for the HARQprocess number.

For an FDD serving cell being scheduled by a TDD or an FDD serving cell, if the PCell is an FDD serving cell and the scheduling of downlink transmission messages is performed through cross-carrier scheduling, a mobile station device assumes the HARQ processes to be defined according to legacy timing, and monitors DCI expecting 3 bits for the HARQ process number.

For a TDD serving cell being scheduled by a TDD or an FDD serving cell, if the PCell is an FDD serving cell and the scheduling of downlink transmission messages is performed through cross-carrier scheduling, a mobile station assumes the HARQ processes to be defined by the legacy table, and monitors DCI expecting 4 bits for the HARQ process number.

Alternatively, the mobile station assumes the HARQ processes to be defined according to the legacy table, and monitors DCI expecting 4 bits for the HARQ process number.

Alternatively, the mobile station device monitors DCI assumes the HARQ processes to be defined by the legacy table, and the number of HARQ processes that the base station must be able to handle simultaneously is defined by the new table.

A program operated in the base station device and the mobile station devices according to the present invention may be a program (program causing a computer to function) for controlling a CPU (Central Processing Unit) or the like so as to realize the functions of the above-described embodiments according to the present invention. The information handled in these devices is temporarily stored in a RAM (Random Access Memory) during the processing of the information, being thereafter stored in various kinds of ROMs such as a flash ROM (Read Only Memory) or an HDD (Hard Disk Drive), and is read out, corrected, or written by the CPU as necessary.

Part of the mobile station devices and the base station device according to the above-described embodiments may be implemented by a computer. In that case, a program for implementing this control function may be recorded on a computer-readable recording medium, and a computer system may be caused to read and execute the program recorded on the recording medium.

Here, the "computer system" is a computer system included in each of the mobile station devices or the base station device, and includes hardware such as an OS and peripheral devices. The "computer-readable recording medium" is a portable medium such as a flexible disk, a magneto-optical disk, a ROM, or a CD-ROM, or a storage device such as a hard disk included in the computer system.

Furthermore, the "computer-readable recording medium" may also include an object that dynamically holds a program for a short time, such as a communication line used to transmit the program via a network such as the Internet or a communication line such as a telephone line, and an object that holds a program for a certain period of time, such as a volatile memory in a computer system serving as a server or a client in this case. Also, the above-described program may implement some of the above-described functions, or may be implemented by combining the above-described functions with a program which has already been recorded on a computer system.

Furthermore, part or whole of the mobile station devices and the base station device in the above-described embodiment may be implemented as an LSI, which is typically an integrated circuit, or as a chip set. The individual functional blocks of the mobile station devices and the base station device may be individually formed into chips, or some or all of the functional blocks may be integrated into a chip. The method for forming an integrated circuit is not limited to LSI, and may be implemented by a dedicated circuit or a general-purpose processor. In a case where the progress of semiconductor technologies produces an integration technology which replaces an LSI, an integrated circuit according to the technology may be used.

While some embodiments of the present invention have been described in detail with reference to the drawings, specific configurations are not limited to those described above, and various design modifications and so forth can be made without deviating from the scope of the appended claims.

### Reference Signs List

- 1: Base station device
- 2: Mobile station device
- 3: PDCCH / ePDCCH
- 4: Downlink data transmission
- 5: Physical Uplink Control Channel
- 6: Downlink data transmission
- 101: Higher layer processing unit
- 1011: Wireless resource management unit
- 1013: Subframe configuration unit
- 1015: Scheduling unit
- 1017: CSI report management unit
- 103: Control unit
- 105: Reception unit
- 1051: Decoding unit
- 1053: Demodulation unit
- 1055: Demultiplexing unit
- 1057: Radio reception unit
- 1059: Channel estimation unit
- 107: Transmission unit
- 1071: Coding unit
- 1073: Modulation unit
- 1075: Multiplexing unit
- 1077: Radio transmission unit
- 1079: Uplink reference signal generation unit
- 109: Antenna unit
- 301: Higher layer processing unit
- 3011: Wireless resource management unit
- 3013: Subframe configuration unit
- 3015: Scheduling unit
- 3017: CSI report management unit
- 303: Control unit
- 305: Reception unit
- 3051: Decoding unit
- 3053: Demodulation unit
- 3055: Demultiplexing unit
- 3057: Radio reception unit
- 3059: Channel estimation unit
- 307: Transmission unit
- 3071: Coding unit
- 3073: Modulation unit
- 3075: Multiplexing unit
- 3077: Radio transmission unit
- 3079: Uplink reference signal generation unit
- 309: Antenna unit

## Claims

1. A terminal apparatus comprising:
a receiver that receives a downlink control information with a Hybrid Automatic Repeat Request, HARQ, process number through a physical downlink control channel for a serving cell, wherein
for a serving cell using Frequency Division Duplexing, FDD, with a primary cell using FDD, a field of the HARQ process number is 3 bits and a maximum number of the HARQ processes is 8, and
for a serving cell using FDD with a primary cell using Time Division Duplexing, TDD, a field of the HARQ process number is 4 bits and the maximum number of the HARQ processes is determined by an uplink/downlink configuration for the serving cell.

2. A terminal apparatus comprising:
a receiver that receives a downlink control information with a Hybrid Automatic Repeat Request, HARQ, process number through a physical downlink control channel for a serving cell, wherein
for a serving cell using Time Division Duplexing, TDD, with a primary cell using TDD, a field of the HARQ process number is 4 bits and a maximum number of the HARQ processes is determined by an uplink/downlink configuration for the serving cell, and
for a serving cell using TDD with a primary cell using Frequency Division Duplexing, FDD, a field of the HARQ process number is 3 bits and the maximum number of the HARQ processes is 8.

3. A base station apparatus comprising:
a transmitter that transmits a downlink control information with a Hybrid Automatic Repeat Request, HARQ, process number through a physical downlink control channel for a serving cell, wherein
for a serving cell using Frequency Division Duplexing, FDD, with a primary cell using FDD, a field of the HARQ process number is 3 bits and a maximum number of the HARQ processes is 8, and
for a serving cell using FDD with a primary cell using Time Division Duplexing, TDD, a field of the HARQ process number is 4 bits and the maximum number of the HARQ processes is determined by an uplink/downlink configuration for the serving cell.

4. A base station apparatus comprising:
a transmitter that transmits a downlink control information with a Hybrid Automatic Repeat Request, HARQ, process number through a physical downlink control channel for a serving cell, wherein
for a serving cell using Time Division Duplexing, TDD, with a primary cell using TDD, a field of the HARQ process number is 4 bits and a maximum number of the HARQ processes is determined by an uplink/downlink configuration for the serving cell, and
for a serving cell using TDD with a primary cell using Frequency Division Duplexing, FDD, a field of the HARQ process number is 3 bits and the maximum number of the HARQ processes is 8.

5. The terminal apparatus according to claim 1, wherein the serving cell using FDD is a same cell as the primary cell using FDD.

6. The terminal apparatus according to claim 2, wherein the serving cell using TDD is a same cell as the primary cell using TDD.

7. The base station apparatus according to claim 3, wherein the serving cell using FDD is a same cell as the primary cell using FDD.

8. The base station apparatus according to claim 4, wherein the serving cell using TDD is a same cell as the primary cell using TDD.

9. The terminal apparatus according to claim 1, wherein HARQ acknowledgment, ACK, for the serving cell using FDD with the primary cell using TDD is transmitted based on a downlink association set for the serving cell.

10. The terminal apparatus according to claim 9, wherein the downlink association set is different from a downlink association set for TDD serving cells.

11. The base station apparatus according to claim 3, wherein HARQ acknowledgment, ACK, for the serving cell using FDD with the primary cell using TDD is transmitted based on a downlink association set for the serving cell.

12. The base station apparatus according to claim 11, wherein the downlink association set is different from a downlink association set for TDD serving cells.

## Patentansprüche

1. Endgeräteeinrichtung, umfassend:
einen Empfänger, der eine Downlink-Steuerinformation mit einer Hybrid-Automatic-Repeat-Request(HARQ)-Prozessnummer durch einen physischen Downlink-Steuerkanal für eine bedienende Zelle empfängt, wobei
für eine bedienende Zelle, die Frequency Division Duplexing (FDD) verwendet, wobei eine primäre Zelle FDD verwendet, ein Feld der HARQ-Prozessnummer 3 Bits ist und eine maximale Anzahl der HARQ-Prozesse 8 ist, und
für eine bedienende Zelle, die FDD verwendet, wobei eine primäre Zelle Time Division Duplexing (TDD) verwendet, ein Feld der HARQ-Prozessnummer 4 Bits ist und die maximale Anzahl der HARQ-Prozesse von einer Uplink-/Downlink-Konfiguration für die bedienende Zelle bestimmt wird.

2. Endgeräteeinrichtung, umfassend:
einen Empfänger, der eine Downlink-Steuerinformation mit einer Hybrid-Automatic-Repeat-Request(HARQ)-Prozessnummer durch einen physischen Downlink-Steuerkanal für eine bedienende Zelle empfängt, wobei
für eine bedienende Zelle, die Time Division Duplexing (TDD) verwendet, wobei eine primäre Zelle TDD verwendet, ein Feld der HARQ-Prozessnummer 4 Bits ist und die maximale Anzahl der HARQ-Prozesse von einer Uplink-/Downlink-Konfiguration für die bedienende Zelle bestimmt wird, und
für eine bedienende Zelle, die TDD verwendet, wobei eine primäre Zelle Frequency Division Duplexing (FDD) verwendet, ein Feld der HARQ-Prozessnummer 3 Bits ist und die maximale Anzahl der HARQ-Prozesse 8 ist.

3. Basisstationseinrichtung, umfassend:
einen Sender, der eine Downlink-Steuerinformation mit einer Hybrid-Automatic-Repeat-Request(HARQ)-Prozessnummer durch einen physischen Downlink-Steuerkanal für eine bedienende Zelle sendet, wobei
für eine bedienende Zelle, die Frequency Division Duplexing (FDD) verwendet, wobei eine primäre Zelle FDD verwendet, ein Feld der HARQ-Prozessnummer 3 Bits ist und eine maximale Anzahl der HARQ-Prozesse 8 ist, und
für eine bedienende Zelle, die FDD verwendet, wobei eine primäre Zelle Time Division Duplexing (TDD) verwendet, ein Feld der HARQ-Prozessnummer 4 Bits ist und die maximale Anzahl der HARQ-Prozesse von einer Uplink-/Downlink-Konfiguration für die bedienende Zelle bestimmt wird.

4. Basisstationseinrichtung, umfassend:
einen Sender, der eine Downlink-Steuerinformation mit einer Hybrid-Automatic-Repeat-Request(HARQ)-Prozessnummer durch einen physischen Downlink-Steuerkanal für eine bedienende Zelle sendet, wobei
für eine bedienende Zelle, die Time Division Duplexing (TDD) verwendet, wobei eine primäre Zelle TDD verwendet, ein Feld der HARQ-Prozessnummer 4 Bits ist und die maximale Anzahl der HARQ-Prozesse von einer Uplink-/Downlink-Konfiguration für die bedienende Zelle bestimmt wird, und
für eine bedienende Zelle, die TDD verwendet, wobei eine primäre Zelle Frequency Division Duplexing (FDD) verwendet, ein Feld der HARQ-Prozessnummer 3 Bits ist und die maximale Anzahl der HARQ-Prozesse 8 ist.

5. Endgeräteeinrichtung nach Anspruch 1, wobei die bedienende Zelle, die FDD verwendet, eine gleiche Zelle wie die primäre Zelle ist, die FDD verwendet.

6. Endgeräteeinrichtung nach Anspruch 2, wobei die bedienende Zelle, die TDD verwendet, eine gleiche Zelle wie die primäre Zelle ist, die TDD verwendet.

7. Basisstationseinrichtung nach Anspruch 3, wobei die bedienende Zelle, die FDD verwendet, eine gleiche Zelle wie die primäre Zelle ist, die FDD verwendet.

8. Basisstationseinrichtung nach Anspruch 4, wobei die bedienende Zelle, die TDD verwendet, eine gleiche Zelle wie die primäre Zelle ist, die TDD verwendet.

9. Endgeräteeinrichtung nach Anspruch 1, wobei eine HARQ-Bestätigung (ACK) für die bedienende Zelle, die FDD verwendet, wobei die primäre Zelle, die TDD verwendet, auf Grundlage eines Downlink-Zuordnungssatzes für die bedienende Zelle gesendet wird.

10. Endgeräteeinrichtung nach Anspruch 9, wobei sich der Downlink-Zuordnungssatz von einem Downlink-Zuordnungssatz für bedienende Zellen, die TDD verwenden, unterscheidet.

11. Basisstationseinrichtung nach Anspruch 3, wobei eine HARQ-Bestätigung (ACK) für die bedienende Zelle, die FDD verwendet, wobei die primäre Zelle, die TDD verwendet, auf Grundlage eines Downlink-Zuordnungssatzes für die bedienende Zelle gesendet wird.

12. Basisstationseinrichtung nach Anspruch 11, wobei sich der Downlink-Zuordnungssatz von einem Downlink-Zuordnungssatz für bedienende Zellen, die TDD verwenden, unterscheidet.

## Revendications

1. Appareil terminal comportant :
un récepteur qui reçoit des informations de commande en liaison descendante avec un nombre de processus de demande à répétitions automatiques hybride (HARQ) à travers un canal de commande physique en liaison descendante pour une cellule de desserte, dans lequel
pour une cellule de desserte utilisant un duplexage par répartition en fréquence (Frequency Division Duplexing - FDD) avec une cellule principale utilisant la FDD, un champ du nombre de processus HARQ est de 3 bits et un nombre maximum des processus HARQ est 8 et
pour une cellule de desserte utilisant le FDD avec une cellule principale utilisant le duplexage par répartition dans le temps (Time Division Duplexing -TDD), un champ du nombre de processus HARQ est de 4 bits et le nombre maximum des processus HARQ est déterminé par une configuration en liaison montante/liaison descendante pour la cellule de desserte.

2. Appareil terminal comportant :
un récepteur qui reçoit des informations de commande en liaison descendante avec un nombre de processus de demande à répétitions automatiques hybride (HARQ) à travers un canal de commande physique en liaison descendante pour une cellule de desserte, dans lequel
pour une cellule de desserte utilisant le duplexage par répartition dans le temps (TDD) avec une cellule principale utilisant le TDD, un champ: du nombre de processus HARQ est de 4 bits et un nombre maximum des processus HARQ est déterminé par une configuration en liaison montante/liaison descendante pour la cellule de desserte et
pour une cellule de desserte utilisant le TDD avec une cellule principale utilisant le duplexage par répartition en fréquence (FDD), un champ du nombre de processus HARQ est de 3 bits et le nombre maximum des processus HARQ est 8.

3. Appareil de station de base comportant :
un émetteur qui émet des informations de commande en liaison descendante avec un nombre de processus de demande à répétitions automatiques hybride (HARQ) à travers un canal de commande physique en liaison descendante pour une cellule de desserte, dans lequel
pour une cellule de desserte utilisant le duplexage par répartition en fréquence (FDD) avec une cellule principale utilisant le FDD, un champ du nombre de processus HARQ est de 3 bits et un nombre maximum des processus HARQ est de 8 et
pour une cellule de desserte utilisant le FDD avec une cellule principale utilisant le duplexage par répartition dans le temps (TDD), un champ du nombre de processus HARQ est de 4 bits et le nombre maximum des processus HARQ est déterminé par une configuration en liaison montante/liaison descendante pour la cellule de desserte.

4. Appareil de station de base comportant :
un émetteur qui émet des informations de commande en liaison descendante avec un nombre de processus de demande à répétitions automatiques hybride (HARQ) à travers un canal de commande physique en liaison descendante pour une cellule de desserte, dans lequel
pour une cellule de desserte utilisant le duplexage par répartition dans le temps (TDD) avec une cellule principale utilisant le TDD, un champ du nombre de processus HARQ est de 4 bits et un nombre maximum des processus HARQ est déterminé par une configuration en liaison montante/liaison descendante pour la cellule de desserte et
pour une cellule de desserte utilisant le TDD avec une cellule principale utilisant le duplexage par répartition en fréquence (FDD), un champ du nombre de processus HARQ est de 3 bits et le nombre maximum des processus HARQ est de 8.

5. Appareil terminal selon la revendication 1, dans lequel la cellule de desserte utilisant le FDD est une cellule identique à la cellule principale utilisant le FDD.

6. Appareil terminal selon la revendication 2, dans lequel la cellule de desserte utilisant le TDD est une cellule identique à la cellule principale utilisant le TDD.

7. Appareil de station de base selon la revendication 3, dans lequel la cellule de desserte utilisant le FDD est une cellule identique à la cellule principale utilisant le FDD.

8. Appareil de station de base selon la revendication 4, dans lequel la cellule de desserte utilisant le TDD est une cellule identique à la cellule principale utilisant le TDD.

9. Appareil terminal selon la revendication 1, dans lequel l'accusé de réception (ACK) HARQ pour la cellule de desserte utilisant le FDD avec la cellule principale utilisant le TDD est transmis sur la base d'un ensemble d'associations en liaison descendante pour la cellule de desserte.

10. Appareil terminal selon la revendication 9, dans lequel l'ensemble d'associations en liaison descendante est différent d'un ensemble d'associations en liaison descendante pour les cellules de desserte TDD.

11. Appareil de station de base selon la revendication 3, dans lequel l'accusé de réception (ACK) HARQ pour la cellule de desserte utilisant le FDD avec la cellule principale utilisant le TDD est transmis sur la base d'un ensemble d'associations en liaison descendante pour la cellule de desserte.

12. Appareil de station de base selon la revendication 11, dans lequel l'ensemble d'associations en liaison descendante est différent d'un ensemble d'associations en liaison descendante pour les cellules de desserte TDD.
